# EUROPEAN PATENT APPLICATION

(11) **EP 4 117 220 A1**
(43) Date of publication of application: **11.01.2023**
(21) Application number: 21784403.4
(22) Date of filing: 08.04.2021
(51) Int. Cl.: H04L 5/14, H04W 72/04

(54) **METHOD FOR INDICATING MODULATION MODES CORRESPONDING TO MULTIPLE RESOURCE UNITS, AND RELATED DEVICE**

(30) Priority: 10.04.2020 CN 202010281190
(71) Applicant: Huawei Technologies Co., Ltd., Shenzhen, Guangdong 518129, (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN); LIANG, Dandan, Shenzhen, Guangdong 518129 (CN)
(74) Representative: Grünecker Patent- und Rechtsanwälte PartG mbB
(86) International application number: PCT/CN2021/085986
(87) International publication number: WO 2021/204209

(57) **Abstract**

Embodiments of this application disclose a method for indicating a modulation scheme corresponding to a multi-resource unit and a related device. The method includes: receiving, by a first device, an EHT PPDU frame sent by a second device. The EHT PPDU frame includes an RU allocation subfield and a user field. The RU allocation subfield and the user field indicate a plurality of RUs allocated to the first device. The plurality of RUs include a first RU and a second RU. A user field corresponding to the first RU indicates a first MCS of an RU other than the second RU in the plurality of RUs. A user field corresponding to the second RU indicates a second MCS of the second RU. The first MCS is different from the second MCS. According to embodiments of this application, an MCS of each of the plurality of RUs allocated to the first device can be efficiently indicated. The technical solutions provided in this application may be applied to 802.11ax and 802.11be Wi-Fi systems, and the like.

## Description

This application claims priority to Chinese Patent Application No. 202010281190.4, filed with the China National Intellectual Property Administration on April 10, 2020 and entitled "METHOD FOR INDICATING MODULATION SCHEME CORRESPONDING TO MULTI-RESOURCE UNIT AND RELATED DEVICE", which is incorporated herein by reference in its entirety.

### TECHNICAL FIELD

This application relates to the field of communication technologies, and in particular, to a method for indicating a modulation scheme corresponding to a multi-resource unit and a related device.

### BACKGROUND

A modern wireless communication service has a continuously growing need for a channel capacity and communication performance of a communication system. To improve a channel capacity and communication performance of a wireless communication system, in an Institute of Electrical and Electronics Engineers (Institute of Electrical and Electronics Engineers, IEEE) 802.11be protocol, a plurality of resource units (resource units, RUs) are allocated to a same user. To further improve allocation flexibility and spectrum utilization of the wireless communication system, if a plurality of RUs can be allocated to one user, different modulation and coding schemes (Modulation and Coding Schemes, MCSs) may be configured for the plurality of RUs of the same user. In other words, the plurality of RUs support unequal modulation (Unequal Modulation, UEQM). How to indicate a modulation and coding scheme of each of the plurality of RUs corresponding to the same user is an urgent problem to be resolved by a person skilled in the art.

### SUMMARY

This application provides a method for indicating a modulation scheme corresponding to a multi-resource unit and a related device, to indicate an MCS of each of a plurality of RUs allocated to a communication device.

According to a first aspect, this application provides a method for indicating a modulation scheme corresponding to a multi-resource unit. The method includes: receiving, by a first device, an extremely high throughput physical layer protocol data unit EHT PPDU frame sent by a second device. The EHT PPDU frame includes an extremely high throughput signal EHT-SIG field. The EHT-SIG field includes a common field and a user specific field. The common field includes a resource unit RU allocation subfield. The user specific field includes a user field corresponding to the first device. The RU allocation subfield and the user field indicate at least two RUs allocated to the first device. The at least two RUs include a first RU and a second RU. A first modulation and coding scheme MCS in a user field corresponding to the first RU is an MCS of an RU other than the second RU in the at least two RUs allocated to the first device. A second MCS in a user field corresponding to the second RU is an MCS of the second RU. The first MCS is different from the second MCS. According to this method, the first device may determine, based on the received EHT PPDU frame sent by the second device, a modulation and coding scheme of each of a plurality of resource units allocated to the first device.

With reference to the first aspect, in a possible implementation, the at least two RUs in a plurality of RUs indicated by the RU allocation subfield are allocated to the first device. The user field corresponding to the first RU or the second RU in the at least two RUs indicates an ID of the first device. In this manner, the first device may determine the at least two RUs allocated to the first device, and may determine, based on the ID of the first device, the user field corresponding to the first device.

With reference to the first aspect, in a possible implementation, the RU allocation subfield further includes an RU combination indication field for indicating at least one of the following: whether an RU indicated by the RU allocation subfield belongs to an RU combination, and that the RU belongs to an RU combination group. In this manner, the first device may determine the at least two RUs allocated to the first device.

With reference to the first aspect, in a possible implementation, the first MCS is a plurality of MCSs that are separately corresponding to a plurality of RUs other than the second RU in the at least two RUs allocated to the first device.

With reference to the first aspect, in a possible implementation, the first RU is an RU with a lowest frequency in the at least two RUs allocated to the first device.

With reference to the first aspect, in a possible implementation, the at least two RUs allocated to the first device are RUs not less than 242-tone.

With reference to the first aspect, in a possible implementation, the user field in which the first MCS is located is a user field corresponding to third 20 MHz or a user field corresponding to fourth 20 MHz in a 996-tone RU.

With reference to the first aspect, in a possible implementation, a quantity of user fields corresponding to the first RU in the plurality of RUs indicated by the RU allocation subfield are corresponding to an actual quantity of users. A user field corresponding to an RU other than the first RU is a user field indicating an MCS. In this manner, the first device may determine a quantity of users actually allocated to an MRU allocated to the first device.

With reference to the first aspect, in a possible implementation, the second RU is an RU with a lowest frequency in the at least two RUs allocated to the first device.

With reference to the first aspect, in a possible implementation, the user field in which the second MCS is located is a user field corresponding to third 20 MHz or a user field corresponding to fourth 20 MHz in a 996-tone RU.

With reference to the first aspect, in a possible implementation, the user field in which the first MCS is located is a user field indicating an MCS. In this manner, the first device may determine a quantity of users actually allocated to the MRU allocated to the first device.

With reference to the first aspect, in a possible implementation, a quantity of users on one of MRUs indicated by the EHT PPDU frame is a difference between a total quantity of device IDs included in a user field corresponding to the MRU and a total quantity of repeated device IDs included in the user field corresponding to the MRU. In this manner, the first device may determine a quantity of users actually allocated to the MRU allocated to the first device.

According to a second aspect, this application provides another method for indicating a modulation scheme corresponding to a multi-resource unit. The method includes: receiving, by a first device, an EHT PPDU frame sent by a second device. The EHT PPDU frame includes an EHT-SIG field. The EHT-SIG field includes a common field and a user specific field. The common field includes an RU allocation subfield. The user specific field includes a user field corresponding to the first device. The RU allocation subfield and the user field indicate at least two RUs allocated to the first device. The RU allocation subfield includes a preset bit. The preset bit indicates an MCS corresponding to at least one RU of the first device. According to this method, the first device may determine, based on the received EHT PPDU frame sent by the second device, a modulation and coding scheme of each of a plurality of resource units allocated to the first device.

With reference to the second aspect, in a possible implementation, the preset bit indicates, in a preset sequence, an MCS corresponding to a preset quantity of target devices. The first device is one of the preset quantity of target devices.

With reference to the second aspect, in a possible implementation, the preset bit indicates, in a preset sequence, an MCS corresponding to a preset quantity of RUs. The preset quantity of RUs include the at least two RUs.

With reference to the second aspect, in a possible implementation, the first device prestores an index table. The index table indicates a correspondence between the preset bit and the MCS.

With reference to the second aspect, in a possible implementation, the preset bit is a bit corresponding to a resource unit allocation subfield corresponding to third 20 MHz and a bit corresponding to a resource unit allocation subfield corresponding to fourth 20 MHz in a 996-tone RU.

According to a third aspect, this application provides a communication apparatus. The communication apparatus includes a receiving unit and a processing unit. The receiving unit is configured to receive an EHT PPDU frame sent by a second device. The EHT PPDU frame includes an EHT-SIG field. The EHT-SIG field includes a common field and a user specific field. The common field includes a resource unit RU allocation subfield. The user specific field includes a user field corresponding to the communication apparatus. The processing unit is configured to determine, based on the RU allocation subfield and the user field, at least two RUs allocated to the communication apparatus. The at least two RUs include a first RU and a second RU. The processing unit is further configured to determine, based on the user field, that a first modulation and coding scheme MCS in a user field corresponding to the first RU is an MCS of an RU other than the second RU in the at least two RUs allocated to the communication apparatus. The processing unit is further configured to determine, based on the user field, that a second MCS in a user field corresponding to the second RU is an MCS of the second RU. The first MCS is different from the second MCS. This communication apparatus may determine, based on the received EHT PPDU frame sent by the second device, a modulation and coding scheme of each of a plurality of resource units allocated to a first device.

With reference to the third aspect, in a possible implementation, the at least two RUs in a plurality of RUs indicated by the RU allocation subfield are allocated to the communication apparatus. The user field corresponding to the first RU or the second RU in the at least two RUs indicates an ID of the communication apparatus. In this manner, the communication apparatus may determine the at least two RUs allocated to the communication apparatus, and may determine, based on the ID of the communication apparatus, the user field corresponding to the communication apparatus.

With reference to the third aspect, in a possible implementation, the RU allocation subfield further includes an RU combination indication field for indicating at least one of the following: whether an RU indicated by the RU allocation subfield belongs to an RU combination, and that the RU belongs to an RU combination group. In this manner, the communication apparatus may determine the at least two RUs allocated to the communication apparatus.

With reference to the third aspect, in a possible implementation, the first MCS is a plurality of MCSs that are separately corresponding to a plurality of RUs other than the second RU in the at least two RUs allocated to the communication apparatus.

With reference to the third aspect, in a possible implementation, the first RU is an RU with a lowest frequency in the at least two RUs allocated to the communication apparatus.

With reference to the third aspect, in a possible implementation, the processing unit determines that the at least two RUs allocated to the communication apparatus are RUs not less than 242-tone.

With reference to the third aspect, in a possible implementation, the user field in which the first MCS is located is a user field corresponding to third 20 MHz or a user field corresponding to fourth 20 MHz in a 996-tone RU.

With reference to the third aspect, in a possible implementation, a quantity of user fields corresponding to the first RU in the plurality of RUs indicated by the RU allocation subfield are corresponding to an actual quantity of users. A user field corresponding to an RU other than the first RU is a user field indicating an MCS. In this manner, the communication apparatus may determine a quantity of users actually allocated to an MRU allocated to the communication apparatus.

With reference to the third aspect, in a possible implementation, the second RU is an RU with a lowest frequency in the at least two RUs allocated to the first device.

With reference to the third aspect, in a possible implementation, the user field in which the second MCS is located is a user field corresponding to third 20 MHz or a user field corresponding to fourth 20 MHz in a 996-tone RU.

With reference to the third aspect, in a possible implementation, the user field in which the first MCS is located is a user field indicating an MCS. In this manner, the communication apparatus may determine a quantity of users actually allocated to the MRU allocated to the communication apparatus.

With reference to the third aspect, in a possible implementation, a quantity of users on one of MRUs indicated by the EHT PPDU frame is a difference between a total quantity of device IDs included in a user field corresponding to the MRU and a total quantity of repeated device IDs included in the user field corresponding to the MRU. In this manner, the communication apparatus may determine a quantity of users actually allocated to the MRU allocated to the communication apparatus.

According to a fourth aspect, this application provides another communication apparatus. The communication apparatus includes a receiving unit and a processing unit. The receiving unit is configured to receive an EHT PPDU frame sent by a second device. The EHT PPDU frame includes an EHT-SIG field. The EHT-SIG field includes a common field and a user specific field. The common field includes an RU allocation subfield. The user specific field includes a user field corresponding to the communication apparatus. The processing unit is configured to determine, based on the RU allocation subfield and the user field, at least two RUs allocated to the communication apparatus. The RU allocation subfield includes a preset bit. The processing unit is further configured to determine, based on the preset bit, an MCS corresponding to at least one RU of the communication apparatus. This communication apparatus may determine, based on the received EHT PPDU frame sent by the second device, a modulation and coding scheme of each of a plurality of resource units allocated to a first device.

With reference to the fourth aspect, in a possible implementation, the preset bit indicates, in a preset sequence, an MCS corresponding to a preset quantity of target devices. The communication apparatus is one of the preset quantity of target devices.

With reference to the fourth aspect, in a possible implementation, the preset bit indicates, in a preset sequence, an MCS corresponding to a preset quantity of RUs. The preset quantity of RUs include the at least two RUs.

With reference to the fourth aspect, in a possible implementation, the communication apparatus further includes a storage unit. The storage unit is configured to store an index table. The index table indicates a correspondence between the preset bit and the MCS.

With reference to the fourth aspect, in a possible implementation, the preset bit is a bit corresponding to a resource unit allocation subfield corresponding to third 20 MHz and a bit corresponding to a resource unit allocation subfield corresponding to fourth 20 MHz in a 996-tone RU.

According to a fifth aspect, this application provides another communication apparatus. The communication apparatus includes a processor, a memory, and a transceiver. The transceiver is configured to receive an EHT PPDU frame. The memory is configured to store program code. The processor is configured to invoke the program code in the memory to perform the method described in any one of the first aspect or the possible implementations of the first aspect.

According to a sixth aspect, this application provides another communication apparatus. The communication apparatus includes a processor, a memory, and a transceiver. The transceiver is configured to receive an EHT PPDU frame. The memory is configured to store program code. The processor is configured to invoke the program code in the memory to perform the method described in any one of the second aspect or the possible implementations of the second aspect.

According to a seventh aspect, this application provides a computer-readable storage medium. The computer-readable storage medium is configured to store instructions. When the instructions are executed, the method described in any one of the first aspect or the possible implementations of the first aspect is implemented.

According to an eighth aspect, this application provides another computer-readable storage medium. The computer-readable storage medium is configured to store instructions. When the instructions are executed, the method described in any one of the second aspect or the possible implementations of the second aspect is implemented.

According to a ninth aspect, this application provides a chip system. The chip system includes at least one processor and an interface, and is configured to support a first device in implementing a function in the first aspect, for example, receiving or processing at least one of data and information in the foregoing method. In a possible design, the chip system further includes a memory. The memory is configured to store program instructions and data that are required by a station. The chip system may include a chip, or may include a chip and another discrete component.

According to a tenth aspect, this application provides another chip system. The chip system includes at least one processor and an interface, and is configured to support a first device in implementing a function in the second aspect, for example, receiving or processing at least one of data and information in the foregoing method. In a possible design, the chip system further includes a memory. The memory is configured to store program instructions and data that are required by the access point. The chip system may include a chip, or may include a chip and another discrete component.

According to embodiments of this application, the first device may determine, based on the received EHT PPDU frame sent by the second device, the modulation and coding scheme of each of the plurality of resource units allocated to the first device.

### BRIEF DESCRIPTION OF DRAWINGS

To describe the technical solutions in embodiments of this application or the prior art more clearly, the following briefly describes the accompanying drawings for describing embodiments or the prior art.
FIG. 1 is a schematic diagram of an architecture of a data communication system according to an embodiment of this application;
FIG. 2A to FIG. 2C are some schematic diagrams of subcarrier distribution and RU distribution according to an embodiment of this application;
FIG. 3 is a schematic diagram of a structure of an HE-SIG-B field according to an embodiment of this application;
FIG. 4 is a schematic diagram of a structure of another HE-SIG-B field according to an embodiment of this application;
FIG. 5 is a flowchart of a method for indicating a modulation scheme corresponding to a multi-resource unit according to an embodiment of this application;
FIG. 6 is a schematic diagram of a frame structure of an EHT PPDU field according to an embodiment of this application;
FIG. 7 to FIG. 12 are some schematic diagrams of RU combinations according to an embodiment of this application;
FIG. 13 is a schematic diagram of a communication apparatus according to an embodiment of this application;
FIG. 14 is a schematic diagram of another communication apparatus according to an embodiment of this application; and
FIG. 15 is a schematic diagram of a structure of a chip according to an embodiment of this application.

### DESCRIPTION OF EMBODIMENTS

The following describes the technical solutions in embodiments of this application in more detail.

The technical solutions in this application may be applied to a wireless local area network (Wireless Local Area Network, WLAN), an Internet of Things (The Internet of Things, IOT), a vehicle-to-everything (Vehicle-to-X, V2X) network, or another network. This is not specifically limited in this application. For example, an application scenario of this application may be a WLAN based on the Institute of Electrical and Electronics Engineers (Institute of Electrical and Electronics Engineers, IEEE) 802.11be standard, an IoT based on the IEEE 802.11be standard, a vehicle-to-everything network based on the IEEE 802.11be standard, or another network based on the IEEE 802.11be standard, or may be a next generation WLAN based on the 802.11be, a IoT based on the next generation IEEE 802.11be standard, a vehicle-to-everything network based on the next generation IEEE 802.11be standard, or another network based on the next generation IEEE 802.11be standard, or may be another WLAN of a future standard protocol.

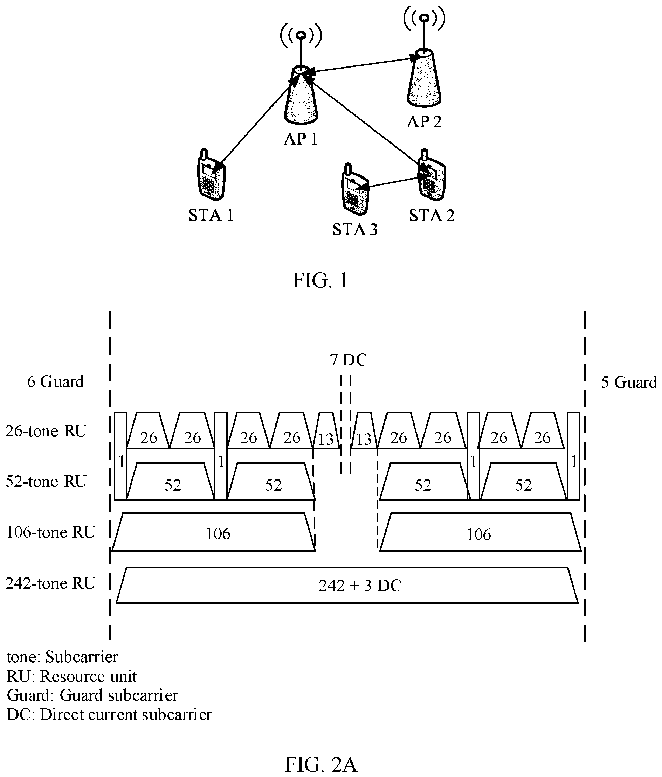

A data communication system provided in embodiments of this application includes one or more access points (access points, APs) and one or more stations (stations, STAs). For example, FIG. 1 is a schematic diagram of an architecture of a data communication system according to an embodiment of this application. The data communication system includes two APs and three STAs. The two APs are one first AP (AP 1) and one second AP (AP 2). The three STAs are one first STA (STA 1), one second STA (STA 2), and one third STA (STA 3). It should be noted that the data communication system includes at least two devices, and may include more or fewer devices than those in FIG. 1. This is not limited herein, and FIG. 1 is only used as an example. A method for indicating a modulation scheme corresponding to a multi-resource unit provided in embodiments of this application is applicable to data communication between an AP and a STA, for example, data communication between the STA 1 and the AP 1, or data communication between the STA 2 and the AP 2. The method is also applicable to data communication between APs, for example, data communication between the AP 1 and the AP 2. The method is also applicable to data communication between STAs, for example, data communication between the STA2 and the STA 3.

The two types of devices are further described below.

The STA in embodiments of this application is an apparatus having a wireless communication function, and may be user equipment, an access terminal, a subscriber unit, a subscriber station, a mobile station, a remote station, a remote terminal, a mobile device, a user terminal, a terminal, a wireless communication device, a user agent, or a user apparatus. Alternatively, the station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

The station may support the 802.11be standard. The station may also support a plurality of WLAN standards of the 802.11 family such as 802.11be, 802.11ax, 802.11ac, 802.11n, 802.11g, 802.11b, and 802.11a.

The access point in this application may be a high efficient (high efficient, HE) STA or an extremely high throughput (extremely high throughput, EHT) STA, or may be a STA applicable to a future Wi-Fi standard.

In embodiments of this application, the AP may be an access point for a terminal device (such as a mobile phone) to access a wired (or wireless) network, and is mainly deployed in a home, a building, and a park. A typical coverage radius is tens of meters to hundreds of meters. Certainly, the AP may alternatively be deployed outdoors. The access point is equivalent to a bridge connecting a wired network and a wireless network. A main function of the AP is to connect wireless network clients, and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as 802.11be, 802.11ax, 802.11ac, 802.11n, 802.11g, 802.11b, and 802.11a. The access point in this application may be a high efficient (high efficient, HE) AP or an extremely high throughput (extremely high throughput, EHT) AP, or may be an access point applicable to a future Wi-Fi standard.

A resource unit (resource unit, RU) in embodiments of this application is a basic frequency resource unit for dividing a frequency resource of a wireless network. An RU type mainly includes a 26-tone RU, a 52-tone RU, a 106-tone RU, a 242-tone RU, a 484-tone RU, a 996-tone RU, a 2^{∗}996-tone RU, and the like. A tone indicates a subcarrier. As the basic frequency resource unit, the RU can be allocated to different users for uplink and downlink data transmission. RUs of different sizes have different bandwidths and may carry services at different rates.

The following describes subcarrier distribution (Tone Plan) under different packet bandwidths. FIG. 2A is a schematic diagram of subcarrier distribution and RU distribution according to an embodiment of this application. When a bandwidth is 20 MHz, the entire bandwidth may include an entire 242-tone RU that represents an RU including 242 subcarriers. The 20-MHz bandwidth may alternatively include various combinations such as a combination of 26-tone RUs, a combination of 52-tone RUs, or a combination of 106-tone RUs. For another example, a 996-tone RU may represent an RU including 996 subcarriers. In addition to an RU used for data transmission, the bandwidth further includes some guard (Guard) subcarriers, empty subcarriers (a part shown by using 1 tone in FIG. 2A), or direct current (Direct Current, DC) subcarriers.

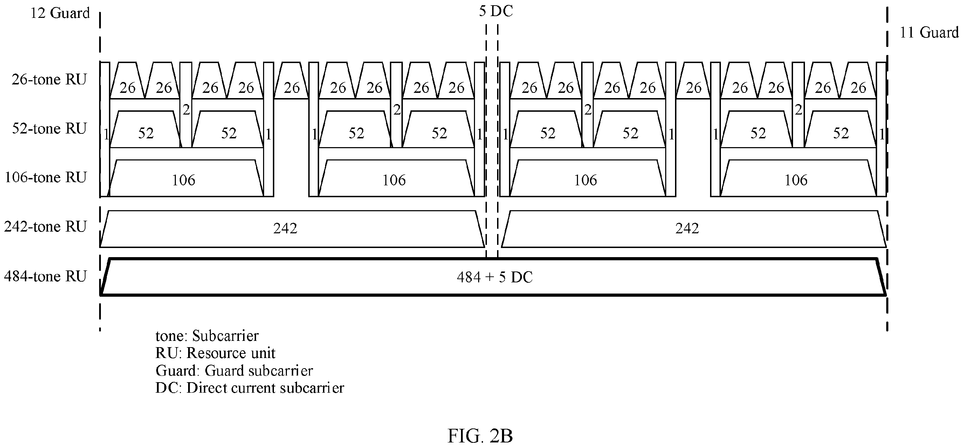

FIG. 2B is another schematic diagram of subcarrier distribution and RU distribution according to an embodiment of this application. When a bandwidth is 40 MHz, the entire bandwidth is approximately equivalent to a replication of the 20-MHz subcarrier distribution. The entire bandwidth may include an entire 484-tone RU, or may include various combinations such as a combination of 26-tone RUs, a combination of 52-tone RUs, a combination of 106-tone RUs, or a combination of 242-tone RUs. Empty subcarriers include parts shown by using 1 tone or 2 tones in the example shown in FIG. 2B.

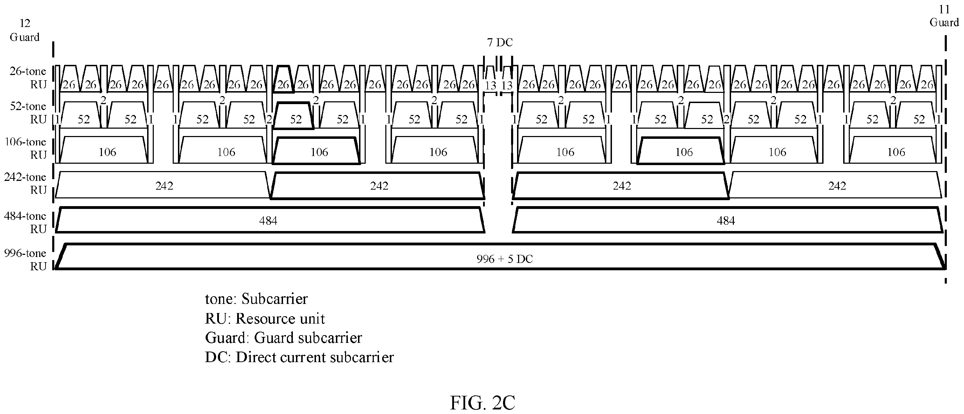

FIG. 2C is another schematic diagram of subcarrier distribution and RU distribution according to an embodiment of this application. When a bandwidth is 80 MHz, the entire bandwidth includes four 242-tone RUs. Particularly, in the middle of the entire bandwidth, there is an intermediate 26-tone RU including two 13-tone subunits. The entire bandwidth may include an entire 996-tone RU, or may include various combinations such as a combination of 26-tone RUs, a combination of 52-tone RUs, a combination of 106-tone RUs, a combination of 242-tone RUs, or a combination of 484-tone RUs. Empty subcarriers include parts shown by using 1 tone or 2 tones in the example shown in FIG. 2C.

According to the foregoing rule, when a bandwidth is 160 MHz or 80+80 MHz, the entire bandwidth may be considered as two replications of the 80-MHz subcarrier distribution. The entire bandwidth may include an entire 2^{∗}996-tone RU, or may include various combinations such as a combination of 26-tone RUs, a combination of 52-tone RUs, a combination of 106-tone RUs, a combination of 242-tone RUs, a combination of 484-tone RUs, or a combination of 996-tone RUs. A difference between 160 MHz and 80+80 MHz lies in that the former is a continuous frequency band, and the two 80-MHz frequency bands of the latter may be separated.

Currently, communication devices in a data communication system based on the IEEE 802.11ax standard may notify each other of an RU allocation status for a plurality of users based on a high efficient signal field B (High Efficient Signal Field B, HE-SIG-B) in a multi-user physical layer protocol data unit (Multiple User PHY Protocol Data Unit, MU PPDU).

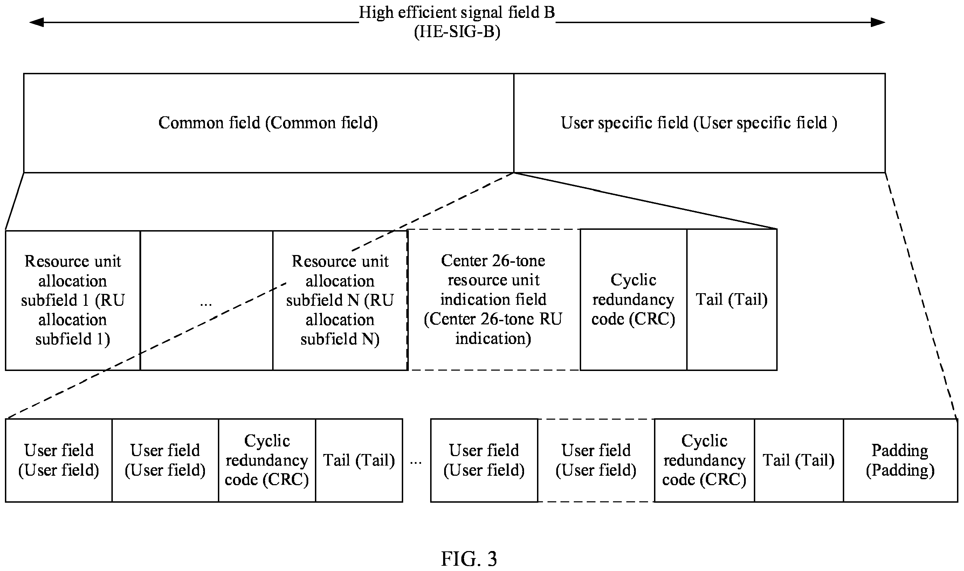

FIG. 3 is a schematic diagram of a structure of an HE-SIG-B field according to an embodiment of this application. The HE-SIG-B field is divided into two parts. A first part is a common field (Common field), and a second part is a user specific field (User Specific field). Specifically, the common field includes 1 to N resource unit allocation subfields (RU Allocation subfields), a center 26-tone (Center 26-Tone) resource unit indication (RU indication) field that exists when a bandwidth is greater than or equal to 80 MHz, a cyclic redundancy code (Cyclic Redundancy Code, CRC) field used for check, and a tail (Tail) subfield used for cyclic decoding. In addition, in a resource unit allocation sequence, there are 1 to M user fields (User Fields) in the user specific field. Usually in the M user fields, every two user fields form a group, and the two user fields are followed by one CRC and one tail field. However, the last group should be excluded. In the last group, there may be one or two user fields. In the foregoing content, N and M are positive integers.

A concept of a content channel (Content Channel, CC) is further introduced into the data communication system based on the IEEE802.11ax standard. When a data packet bandwidth is only 20 MHz, the HE-SIG-B field includes only one content channel. The content channel includes one resource unit allocation subfield for indicating a resource unit allocation indication in a range of the 242-tone (tone) RU in a data part. The resource unit allocation subfield is eight bits (bits). All possible resource unit arrangement and combination modes in the 242-tone RU are indicated through indexing. In addition, for an RU whose size is greater than or equal to 106-tone, an index may further indicate a quantity of users performing single-user/multi-user multiple-input multiple-output (SU/MU-MIMO) transmission in the RU. Table 1 is an index table of resource unit allocation subfields.

**Table 1**

| Resource unit allocation subfield (B7, B6, B5, B4, B3, B2, B1, B0) | #1 | #2 | #3 | #4 | #5 | #6 | #7 | #8 | #9 | Quantity |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| 00010y₂y₁y₀ | 52 | | 52 | | - | 106 | | | | 8 |
| 00011y₂y₁y₀ | 106 | | | | - | 52 | | 52 | | 8 |
| 00100y₂y₁y₀ | 26 | 26 | 26 | 26 | 26 | 106 | | | | 8 |
| 00101y₂y₁y₀ | 26 | 26 | 52 | | 26 | 106 | | | | 8 |
| 00110y₂y₁y₀ | 52 | | 26 | 26 | 26 | 106 | | | | 8 |
| 00111y₂y₁y₀ | 52 | | 52 | | 26 | 106 | | | | 8 |
| 01000y₂y₁y₀ | 106 | | | | 26 | 26 | 26 | 26 | 26 | 8 |
| 01001y₂y₁y₀ | 106 | | | | 26 | 26 | 26 | 52 | | 8 |
| 01010y₂y₁y₀ | 106 | | | | 26 | 52 | | 26 | 26 | 8 |
| 01011y₂y₁y₀ | 106 | | | | 26 | 52 | | 52 | | 8 |
| 0110y₁y₀z₁z₀ | 106 | | | | - | 106 | | | | 16 |
| 01110000 | 52 | | 52 | | - | 52 | | 52 | | 1 |
| 01110001 | 242-tone RU: null (zero users) | | | | | | | | | 1 |
| 01110010 | A 484-tone RU that is on the HE-SIG-B content channel and whose resource unit allocation subfield includes zero user fields | | | | | | | | | 1 |
| 01110011 | A 996-tone RU that is on the HE-SIG-B content channel and whose resource unit allocation subfield includes zero user fields | | | | | | | | | 1 |
| 011101x₁x₀ | Reserved | | | | | | | | | 4 |
| 01111y₂y₁y₀ | Reserved | | | | | | | | | 8 |
| 10y₂y₁y₀z₂z₁z₀ | 106 | | | | 26 | 106 | | | | 64 |
| 11000y₂y₁y₀ | 242 | | | | | | | | | 8 |
| 11001y₂y₁y₀ | 484 | | | | | | | | | 8 |
| 11010y₂y₁y₀ | 996 | | | | | | | | | 8 |
| 11011y₂y₁y₀ | Reserved | | | | | | | | | 8 |
| 111X₄X₃X₂X₁X₀ | Reserved | | | | | | | | | 32 |

Each row in Table 1 represents one RU configuration. For example, the resource unit allocation subfield 00000000 indicates that an RU configuration of a 20 MHz bandwidth (corresponding to 242-tone) corresponding to one user includes nine 26-tone RUs. Most RU configurations shown in the table are in the range of the 242-tone RU. In addition, a few RU configurations indicate that the RU belongs to a 242-tone RU, a 484-tone RU, or a 996-tone RU. Specifically, each 8-bit resource unit allocation subfield indicates an RU allocation status in a corresponding 20 MHz bandwidth range, meaning that the 20 MHz bandwidth corresponds to one resource unit allocation subfield, the 40 MHz bandwidth corresponds to two resource unit allocation subfields, the 80 MHz bandwidth corresponds to four resource unit allocation subfields, and the 160 MHz bandwidth corresponds to eight resource unit allocation subfields.

It should be noted that a sequence in which users appear in the user specific field is consistent with a sequence of RUs obtained through division in a corresponding resource unit allocation subfield. The user may identify, by reading a STA ID in a user field, whether the user field belongs to the user. With reference to a location in which the user field appears and the corresponding resource unit allocation subfield, the user may learn an RU allocation status of the user.

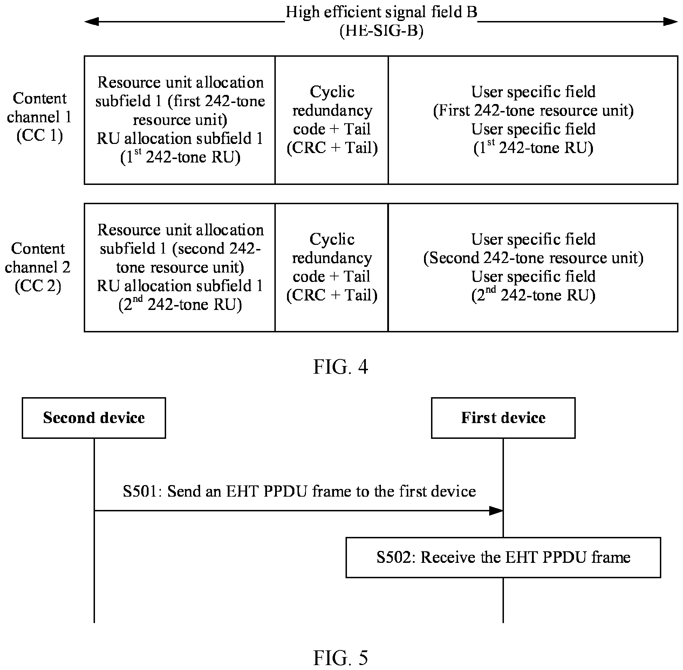

To effectively multiplex resources, in the data communication system based on the IEEE802.11ax standard, when the data packet bandwidth is greater than or equal to 40 MHz, content in the HE-SIG-B field is represented by a CC 1 and a CC 2. In other words, when the data packet bandwidth is 40 MHz, there are two HE-SIG-B content channels: the CC 1 and the CC 2. The first HE-SIG-B channel CC 1 includes a resource unit allocation subfield in a first 20 MHz bandwidth range and a corresponding user specific field. The second HE-SIG-B channel CC 2 includes a resource unit allocation subfield in a second 20 MHz bandwidth range and a corresponding user specific field. For example, FIG. 4 is a schematic diagram of a structure of another HE-SIG-B field according to an embodiment of this application.

When the data packet bandwidth is 80 MHz, two CCs still exist, and there are four channels in total. Therefore, resource unit allocation information is indicated on the four channels in an ascending sequence of frequencies based on a structure of a CC 1, a CC 2, a CC 1, and a CC 2. The CC 1 includes resource unit allocation subfields and corresponding user specific fields in first and third 20 MHz bandwidth ranges. The CC 2 includes resource unit allocation subfields and corresponding user specific fields in second and fourth 20 MHz bandwidth ranges. Array grouping in the case of higher bandwidth is similar.

In conclusion, it may be learned that the CC 1 and the CC 2 each display a part of content of the resource unit allocation subfield. By reading information in the CC 1 and the CC 2, a communication device may determine an RU allocation status corresponding to each 20 MHz.

Currently, a plurality of user fields may indicate a multi-RU (multi-resource unit, MRU) allocated to one communication device. The following describes this manner. In the user specific field in the HE-SIG-B field, a plurality of user fields with a same STA ID are allowed to exist. These user fields may indicate that a plurality of RUs indicated by a corresponding RU allocation subfield are allocated to one communication device. Correspondingly, the communication device may identify, based on a STA ID of the communication device, a plurality of user fields that belong to the communication device. Because a sequence in which users appear in the user specific field is consistent with a sequence of RUs obtained through division in a corresponding resource unit allocation subfield, the communication device may determine, based on locations of the plurality of user fields, the plurality of RUs allocated to the communication device.

In some embodiments, reference may be further made to a resource allocation method described in Chinese Patent Application 202010028036.6 entitled "RESOURCE UNIT COMBINATION INDICATION METHOD AND COMMUNICATION APPARATUS".

The following further describes the method for indicating a modulation scheme corresponding to a multi-resource unit provided in embodiments of this application with reference to the data communication system, the STA, and the AP that are described in the foregoing content.

FIG. 5 is a flowchart of a method for indicating a modulation scheme corresponding to a multi-resource unit according to an embodiment of this application. The method may be implemented based on the data communication system shown in FIG. 1. A first device described below may be a STA in the data communication system shown in FIG. 1, and a second device described below may be an AP in the data communication system shown in FIG. 1. In another embodiment, the first device described below may be an AP in the data communication system shown in FIG. 1, and the second device described below may be an AP in the data communication system shown in FIG. 1. In another embodiment, the first device described below may be a STA in the data communication system shown in FIG. 1, and the second device described below may be a STA in the data communication system shown in FIG. 1. In another embodiment, the first device described below may be an AP in the data communication system shown in FIG. 1, and the second device described below may be a STA in the data communication system shown in FIG. 1. In another possible implementation, the first device or the second device may alternatively be a multi-link device (multi-link device, MLD).

The method includes but is not limited to the following steps.

S501: The second device sends an extremely high throughput physical layer protocol data unit (Extremely High Throughput PHY Protocol Data Unit, EHT PPDU) frame to the first device.

It should be noted that, in this embodiment of this application, only the EHT is used as an example. In actual application, the EHT may alternatively be another name, for example, may be a name used in a standard after the IEEE 802.11ax standard.

S502: The first device receives the EHT PPDU frame sent by the second device.

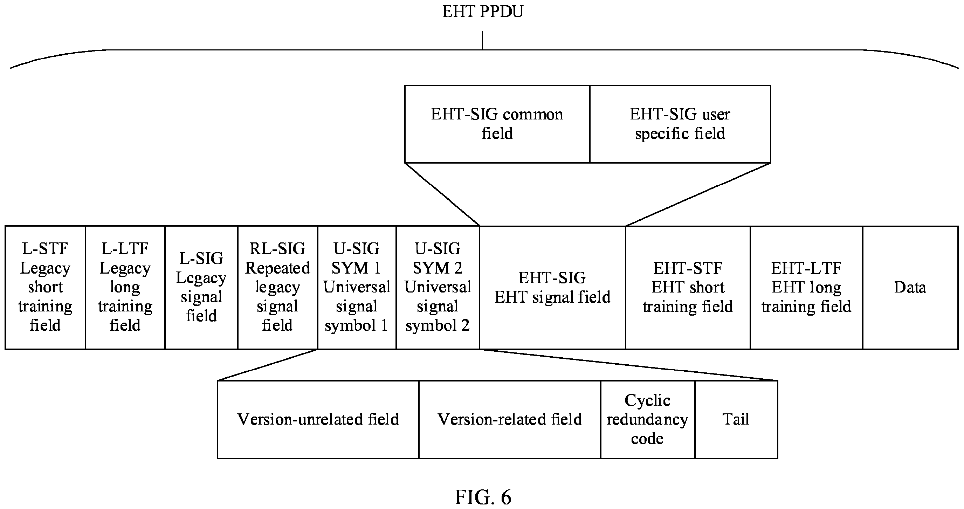

FIG. 6 is a schematic diagram of a frame structure of an EHT PPDU field according to an embodiment of this application. For example, the EHT PPDU frame includes a legacy short training field (L-STF), a legacy long training field (L-LTF), a legacy signal (L-SIG) field, a repeated legacy signal (RL-SIG) field, a universal signal symbol 1 (U-SIG SYM1), a universal signal symbol 2 (U-SIG SYM2), an extremely high throughput signal (Extremely High Throughput Signal, EHT-SIG) field, an EHT short training field (EHT-STF), an EHT long training field (EHT-LTF), a data field, and the like.

Specifically, the universal signal symbol 1 and the universal signal symbol 2 may include a version-unrelated field, a version-related information field, a cyclic redundancy code field, and a tail field.

Specifically, the EHT-SIG field includes an EHT-SIG common field and an EHT-SIG user specific field. The common field includes an RU allocation subfield. The user specific field includes a user field corresponding to the first device. Specifically, the RU allocation subfield and the user field indicate at least two RUs allocated to the first device. The at least two RUs include a first RU and a second RU.

In some embodiments, the at least two of a plurality of RUs indicated by the RU allocation subfield are allocated to the first device. Optionally, the index table of the RU allocation subfields includes a first preset entry indicating an MRU combination. The first preset entry is used at a corresponding MRU in a content channel. The communication device may determine, based on the first preset entry, the MRU allocated to the communication device.

An RU combination may meet the following rules: (1) Small RUs and large RUs are not combined. (2) Small RUs cannot be combined at a spacing of 20 MHz. (3) The combination of small RUs is continuous. The small RU is an RU less than 242-tone. The large RU is an RU greater than or equal to 242-tone. Based on the foregoing RU combination rules, the following describes an example of a large RU combination. In other words, at least one of the first RU and the second RU is an RU not less than 242-tone. Alternatively, the at least two RUs allocated to the first device are RUs not less than 242-tone. It should be noted that the data communication system may alternatively use another RU combination rule. The at least two RUs allocated to the first device may meet the another RU combination rule. In addition, the RU combination indicates that a plurality of RUs may be allocated to a same communication device (for example, the first device) for communication, and does not limit that the plurality of RUs need to be combined into one RU.

For example, if the first device uses a combination of the 242-tone RU and the 484-tone RU, the first preset entry may be "242+484". Specifically, the first preset entry "242+484" is included in a content channel corresponding to the first 242-tone RU required for the combination, and the first preset entry "242+484" is included in a content channel corresponding to the second 484-tone RU required for the combination. In another example, the first device uses a combination of a 484-tone RU, a 242-tone RU, and a 996-tone RU. In this case, the first preset entry may be "484+242+996". Specifically, the first preset entry "484+242+996" is included in a content channel corresponding to the first 484-tone RU required for the combination, the first preset entry "484+242+996" is included in a content channel corresponding to the second 242-tone RU required for the combination, and the first preset entry "484+242+996" is included in a content channel corresponding to the third 996-tone RU required for the combination.

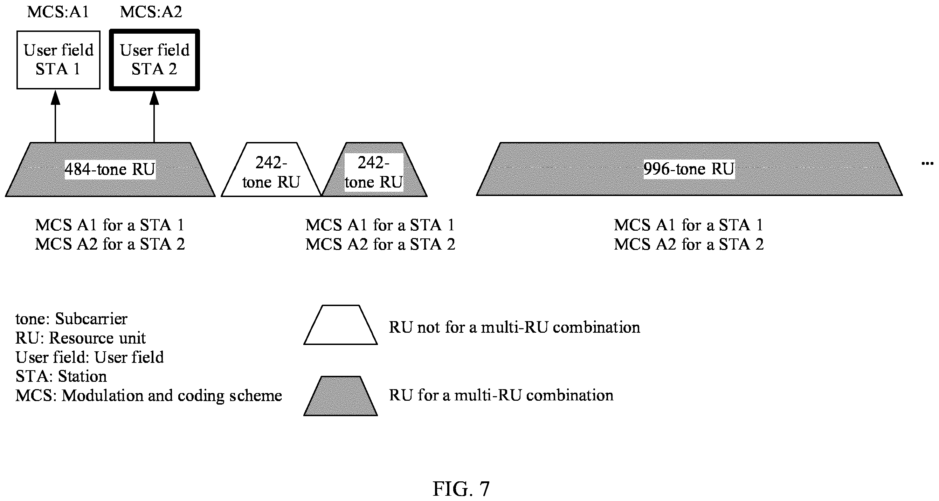

For example, FIG. 7 is a schematic diagram of an RU combination according to an embodiment of this application. It should be noted that only a combination mode of the first 160 MHz bandwidths of a 320 MHz bandwidth is shown herein. In addition, Table 2 includes information in a content channel. In this example, the first device may be a STA 1 in FIG. 7, or maybe a STA2 in FIG. 7.

**Table 2**

| | | | | | | | | |
|---|---|---|---|---|---|---|---|---|
| CC 1 | 484+242+996 | else | 484+242+996 | 484+242+996 | else | else | else | else |
| | (1) | | (0) | (0) | | | | |
| CC 2 | 484+242+996 (1) | 484+242+996 (0) | 484+242+996 (0) | 484+242+996 (0) | else | else | else | else |

With reference to FIG. 7 and Table 2, for the first 160 MHz bandwidth, resource unit allocation information is indicated on eight content channels in an ascending sequence of frequencies based on a structure of a CC 1, a CC 2, a CC 1, and a CC 2. The CC 1 includes RU allocation subfields in first, third, fifth, and seventh 20 MHz bandwidth ranges, and a user field corresponding to the first 20 MHz bandwidth range. The CC 2 includes RU subfields in second, fourth, sixth, and eighth 20 MHz bandwidth ranges, and a user field corresponding to the second 20 MHz bandwidth range. It should be noted that, for the complete 320 MHz bandwidth, the CC 1 further includes RU allocation subfields in ninth, eleventh, thirteenth, and fifteenth bandwidth ranges. The CC 2 further includes RU allocation subfields in tenth, twelfth, fourteenth, and sixteenth bandwidth ranges. Herein, "484+242+996" is the first preset entry for indicating the MRU combination, and else indicates another entry. A number x in brackets in Table 2 indicates that the RU allocation subfield corresponds to x user fields. It may be learned from Table 2 that the first device uses a combination of a 484-tone RU, a 242-tone RU, and a 996-tone RU. The RUs used for the combination are the 484-tone RU (the first 20 MHz bandwidth range and the second 20 MHz bandwidth range), the second 242-tone RU (the fourth 20 MHz bandwidth range), and the 996-tone RU (the fifth, sixth, seventh, and eighth 20 MHz bandwidth ranges) shown in FIG. 7.

In another embodiment, the RU allocation subfield further includes an RU combination indication field. The RU combination indication field indicates at least one of the following: whether an RU indicated by the RU allocation subfield belongs to an RU combination, and that the RU belongs to an RU combination group. For example, the RU combination indication field may be two bits (bits) located at the tail of the field. Specifically, 00 indicates that a corresponding RU allocation subfield does not belong to a combination, 01 indicates that a corresponding RU allocation subfield belongs to an RU combination group 1, 10 indicates that a corresponding RU allocation subfield belongs to an RU combination group 2, and 11 indicates that a corresponding RU allocation subfield belongs to an RU combination group 3.

Table 3 includes information in another content channel.

**Table 3**

| | | | | | | | | |
|---|---|---|---|---|---|---|---|---|
| CC 1 | 484-(01) (1) | else-(OO) | 996-(01) (0) | 996-(01) (0) | else | else | else | else |
| CC 2 | 484-(01) (1) | 242-(01) (0) | 996-(01) (0) | 996-(01) (0) | else | else | else | else |

Similarly, with reference to FIG. 7 and Table 3, for the first 160 MHz bandwidth, resource unit allocation information is indicated on eight content channels in an ascending sequence of frequencies based on a structure of a CC 1, a CC 2, a CC 1, and a CC 2. Herein, "484" indicates a 484-tone RU, and 01 indicates that the 484-tone RU belongs to an RU combination group 1. The first else represents another entry, and 00 indicates that an RU (an RU corresponding to the third 20 MHz bandwidth range, which may also be considered as a first 242-tone RU in FIG. 7) corresponding to the else does not belong to the RU combination. "242" indicates a 242-tone RU (an RU corresponding to the fourth 20 MHz bandwidth range, which may also be considered as the second 242-tone RU in FIG. 7), and 01 indicates that the 242-tone RU belongs to an RU combination group 1. "996" indicates a 996-tone RU, and 01 indicates that the 996-tone RU belongs to an RU combination group 1. A number x in second brackets in Table 2 indicates that the RU allocation subfield corresponds to x user fields. In addition, if the else entry corresponds to a small RU, an RU allocation subfield corresponding to the small RU may not include an RU combination indication field, because the small RU is not combined with a large RU.

It should be noted that, in the foregoing example, a modulation and coding scheme (Modulation and Coding Scheme, MCS) of each RU in a combined MRU is an MCS that is set in a user field. Specifically, the user field corresponding to the first 20 MHz bandwidth range includes a STAID of the STA 1. The user field corresponding to the second 20 MHz bandwidth range includes a STA ID of the STA 2.

The following describes a manner in which the user field indicates the at least two RUs allocated to the first device. Specifically, a first MCS in a user field corresponding to the first RU is an MCS of an RU other than the second RU in the at least two RUs allocated to the first device. A second MCS in a user field corresponding to the second RU is an MCS of the second RU. The first MCS is different from the second MCS.

In an embodiment, there is one first MCS, and the first MCS may be considered as a default MCS. A plurality of RUs other than the second RU in the at least two RUs allocated to the first device all use the first MCS.

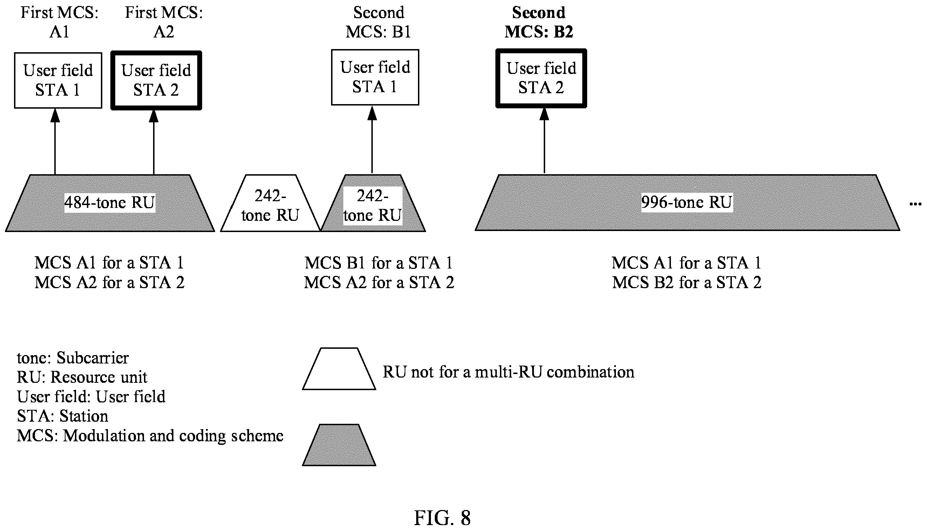

For example, FIG. 8 is a schematic diagram of another RU combination according to an embodiment of this application. FIG. 8 shows a case in which a 160 MHz bandwidth includes four RUs whose frequencies are in an ascending sequence, including a first RU (a 484-tone RU), a second RU (a first 242-tone RU), a third RU (a second 242-tone RU), and a fourth RU (a 996-tone RU). When a bandwidth is greater than 160 MHz, there may be more RUs behind the fourth RU, and the RUs are not illustrated one by one herein.

The first RU, the third RU, and the fourth RU are simultaneously allocated to a STA 1 and a STA 2 as an MRU.

Corresponding content channel information is described in the following Table 4. Refer to Table 4.

**Table 4**

| | | | | | | | | |
|---|---|---|---|---|---|---|---|---|
| CC 1 | 484+242+996 (1) | else | 484+242+996 (1) | 484+242+996 (0) | else | else | else | else |
| CC 2 | 484+242+996 (1) | 484+242+996 (1) | 484+242+996 (0) | 484+242+996 (0) | else | else | else | else |

In Table 4, 484+242+996 (1) in the first column corresponding to the CC 1 and 484+242+996 (1) in the first column corresponding to the CC 2 jointly represent the 484-tone RU shown in FIG. 8. The 484-tone RU, the second 242-tone RU, and the 996-tone RU are combined into an MRU. In 484+242+996 (1), (1) represents a quantity of users. Herein, at the 484-tone RU, a corresponding quantity of users is 1+1=2. In other words, the users include the STA 1 and the STA 2.
else in the second column corresponding to the CC 1 indicates that the second 242-tone RU shown in FIG. 8 is not allocated to the STA 1 or the STA 2.

484+242+996 (1) in the second column corresponding to the CC 2 represents the second 242-tone RU shown in FIG. 8. The second 242-tone RU, the 484-tone RU, and the 996-tone RU are combined into an MRU. In addition, at the 242-tone RU, a corresponding user field indicates an MCS different from that indicated by a user field in the 484-tone RU, and does not indicate a quantity of users.

484+242+996 (1) in the third column corresponding to the CC 1, 484+242+996 (0) in the third column corresponding to the CC 2, 484+242+996 (0) in the fourth column corresponding to the CC 1, and 484+242+996 (0) in the fourth column corresponding to the CC 2 jointly represent the 996-tone RU shown in FIG. 8. In addition, the 996-tone RU, the 484-tone RU, and the second 242-tone RU are combined into an MRU. In addition, at the 996-tone RU, a corresponding user field indicates an MCS different from that indicated by a user field in the 484-tone RU, and does not indicate a quantity of users.

In a possible implementation, the first device is a STA 1 shown in FIG. 8. With reference to the descriptions in the foregoing content, it may be determined that a multi-RU allocated to the STA 1 includes a 484-tone RU, a second 242-tone RU, and a 996-tone RU. In this case, the first MCS is A1, and the first RU is the 484-tone RU. The second MCS is B1, and the second RU is the second 242-tone RU. A plurality of RUs (namely, the first RU and the 996-tone RU) other than the second RU in the at least two RUs allocated to the first device all use the first MCS. Specifically, the first RU is an RU with a lowest frequency in the at least two RUs allocated to the first device (the STA 1). This is merely an example. In another implementation, the first RU may alternatively be an RU with a highest frequency.

In other words, the user field in which the first MCS is located is a first user field in a plurality of user fields corresponding to the first device (the STA 1). The plurality of user fields corresponding to the first device (the STA 1) are user fields corresponding to the first 20 MHz bandwidth range and the fourth 20 MHz bandwidth range. The user field in which the first MCS is located is a user field corresponding to the first 20 MHz bandwidth range. Specifically, the user field corresponding to the first RU or the second RU in the at least two RUs allocated to the first device includes an ID of the first device. In other words, the user fields corresponding to the first 20 MHz bandwidth range and the fourth 20 MHz bandwidth range include the STA ID of the STA 1. In this way, the STA 1 may determine, based on the STA ID, a user field corresponding to the STA 1.

In another possible implementation, the first device is a STA 2 shown in FIG. 8. With reference to the descriptions in the foregoing content, it may be determined that a multi-RU allocated to the STA 2 includes a 484-tone RU, a second 242-tone RU, and a 996-tone RU. In this case, the first MCS is A2, and the first RU is the 484-tone RU. The second MCS is B2, and the second RU is the 996-tone RU. A plurality of RUs (namely, the first RU and the second 242-tone RU) other than the second RU in the at least two RUs allocated to the first device all use the first MCS. Specifically, the first RU may be an RU with a lowest frequency in the at least two RUs allocated to the first device (the STA 2).

In other words, the user field in which the first MCS is located may be a first user field in a plurality of user fields corresponding to the first device (the STA 2). The plurality of user fields corresponding to the first device (the STA 2) are user fields corresponding to the second 20 MHz bandwidth range and the fifth 20 MHz bandwidth range. The user field in which the first MCS is located is a user field corresponding to the second 20 MHz bandwidth range. Specifically, the user field corresponding to the first RU or the second RU in the at least two RUs allocated to the first device includes an ID of the first device. In other words, the user fields corresponding to the second 20 MHz bandwidth range and the fifth 20 MHz bandwidth range include the STA ID of the STA 1. In this way, the STA 2 may determine, based on the STA ID, a user field corresponding to the STA 2.

In this embodiment, a user field is added to a user field corresponding to an RU (namely, the second RU) with an MCS different from the default MCS. The added user field may indicate an MCS of the RU. It should be noted that if all RUs allocated to the first device use the default MCS, the user field does not need to be added. In this manner, an MCS of each of the plurality of RUs corresponding to the first device can be efficiently indicated.

Further, because the first device needs to determine whether the first device is an MU-MIMO user and needs to set a quantity of data streams, the first device needs to determine an actual quantity of users on a multi-RU combination allocated to the first device. However, in the foregoing embodiment, the user field indicating the MCS is added, and the quantity of user fields is different from the quantity of users actually allocated to the multi-RU combination. Therefore, the first device cannot determine, based on the quantity of user fields, the actual quantity of users on the multi-RU combination allocated to the first device. For example, as described in Table 4, the multi-RU combination for the first device (for example, the STA 1) corresponds to four user fields. However, the users actually allocated to the multi-RU combination are the STA 1 and the STA 2, and the actual quantity of users is 2.

To enable the first device to determine the actual quantity of users on the multi-RU combination allocated to the first device, the following design rule is proposed for a user field in an EHT PPDU frame in this embodiment of this application.

In a first manner, a quantity of user fields corresponding to the first RU in the plurality of RUs indicated by the RU allocation subfield are corresponding to an actual quantity of users. A user field corresponding to an RU other than the first RU is a user field indicating an MCS. With reference to the foregoing example, the first RU is a 484-tone RU. The user fields corresponding to the first RU include user fields corresponding to the first 20 MHz bandwidth range and the second 20 MHz bandwidth range. The quantity of user fields is 2. The quantity of user fields is the same as the quantity of users actually allocated to the multi-RU. In another example, if four users are allocated to the plurality of RUs, the user fields corresponding to the first RU include four user fields. One of the user fields corresponding to the first RU corresponds to one actual user. In this manner, the first device may determine the actual quantity of users based on the quantity of user fields corresponding to the first RU.

In a second manner, the user field in which the second MCS is located is a user field corresponding to third 20 MHz or a user field corresponding to fourth 20 MHz in a 996-tone RU. In this manner, a location of the user field in which the second MCS is located may be specified. The user field in which the second MCS is located is the user field indicating the MCS. In this manner, the first device may determine the actual quantity of users based on a quantity of user fields, other than the user field corresponding to the third 20 MHz and the user field corresponding to the fourth 20 MHz in the 996-tone RU, in all the user fields corresponding to the multi-RU allocated to the first device.

For example, with reference to the foregoing example, in this design manner, for information in the content information, refer to Table 5.

**Table 5**

| | | | | | | | | |
|---|---|---|---|---|---|---|---|---|
| CC 1 | 484+242+996 (1) | else | 484+242+996 (0) | 484+242+996 (1) | else | else | else | else |
| CC 2 | 484+242+996 (1) | 484+242+996 (0) | 484+242+996 (0) | 484+242+996 (1) | else | else | else | else |

In Table 5, 484+242+996 (1) in the first column corresponding to the CC 1 and 484+242+996 (1) in the first column corresponding to the CC 2 jointly represent the 484-tone RU shown in FIG. 8. The 484-tone RU, the second 242-tone RU, and the 996-tone RU are combined into an MRU. In 484+242+996 (1), (1) represents a quantity of users. Herein, at the 484-tone RU, a corresponding quantity of users is 1+1=2. In other words, the users include the STA 1 and the STA 2.
else in the second column corresponding to the CC 1 indicates that the second 242-tone RU shown in FIG. 8 is not allocated to the STA 1 or the STA 2.

484+242+996 (0) in the second column corresponding to the CC 2 represents the second 242-tone RU shown in FIG. 8. The second 242-tone RU, the 484-tone RU, and the 996-tone RU are combined into an MRU. In 484+242+996(0), (0) represents a quantity of users. Herein, a corresponding quantity of users is 0.

484+242+996 (0) in the third column corresponding to the CC 1, 484+242+996 (0) in the third column corresponding to the CC 2, 484+242+996 (1) in the fourth column corresponding to the CC 1, and 484+242+996 (1) in the fourth column corresponding to the CC 2 jointly represent the 996-tone RU shown in FIG. 8. The 996-tone RU, the 484-tone RU, and the second 242-tone RU are combined into an MRU. At the 996-tone RU, 484+242+996 (0) in the third column corresponding to the CC 1 and 484+242+996 (0) in the third column corresponding to the CC 2 are corresponding to a user field corresponding to first 20 MHz and a user field corresponding to second 20 MHz in the 996-tone RU. In 484+242+996 (0), (0) represents a quantity of users. Herein, a corresponding quantity of users is 0. 484+242+996 (1) in the fourth column corresponding to the CC 1 and 484+242+996 (1) in the fourth column corresponding to the CC 2 are corresponding to the user field corresponding to the third 20 MHz and the user field corresponding to the fourth 20 MHz in the 996-tone RU. The two user fields indicate an MCS different from that indicated by the user field in the 484-tone RU, and do not indicate a quantity of users.

It should be noted that, for a multi-RU combination case corresponding to Table 5, refer to FIG. 8. However, a location of the user field corresponding to Table 5 is not completely the same as a location of the user field shown in FIG. 8. Specifically, a location of the user field corresponding to the 484-tone RU remains unchanged. A difference lies in that a user field in which the second MCS of the STA 1 is located is the user field corresponding to the third 20 MHz in the 996-tone RU, and a user field in which the second MCS of the STA 2 is located is the user field corresponding to the fourth 20 MHz in the 996-tone RU. The first device may determine the actual quantity of users based on a quantity of user fields other than the two user fields in all the user fields corresponding to the multi-RU allocated to the first device. That is, the determined actual quantity of users is 2+0+0=2.

A difference from Table 4 is as follows. Table 4 specifies a location of the user field indicating the quantity of users, namely, the user field corresponding to the first RU. Remaining user fields are user fields indicating an MCS, and the remaining user fields do not indicate a quantity of users. However, Table 5 specifies a location of the user field indicating the MCS, namely, the user field in which the second MCS is located. The user field indicating the MCS does not indicate the quantity of users, and other user fields may indicate the quantity of users.

In another possible implementation, the actual quantity of users may alternatively be determined based on a device ID included in a user field corresponding to the multi-RU for the first device. Specifically, a quantity of users on one of MRUs indicated by the EHT PPDU frame is a difference between a total quantity of device IDs included in a user field corresponding to the MRU and a total quantity of repeated device IDs included in the user field corresponding to the MRU. For example, with reference to the foregoing example, the quantity of users on the multi-RU that is for the first device and that is indicated by the EHT PPDU frame is a difference between a total quantity (namely, 4) of STA IDs included in the user field corresponding to the multi-RU for the first device and a total quantity (namely, 2) of repeated STA IDs included in the user field corresponding to the multi-RU. That is, the determined actual quantity of users is 2.

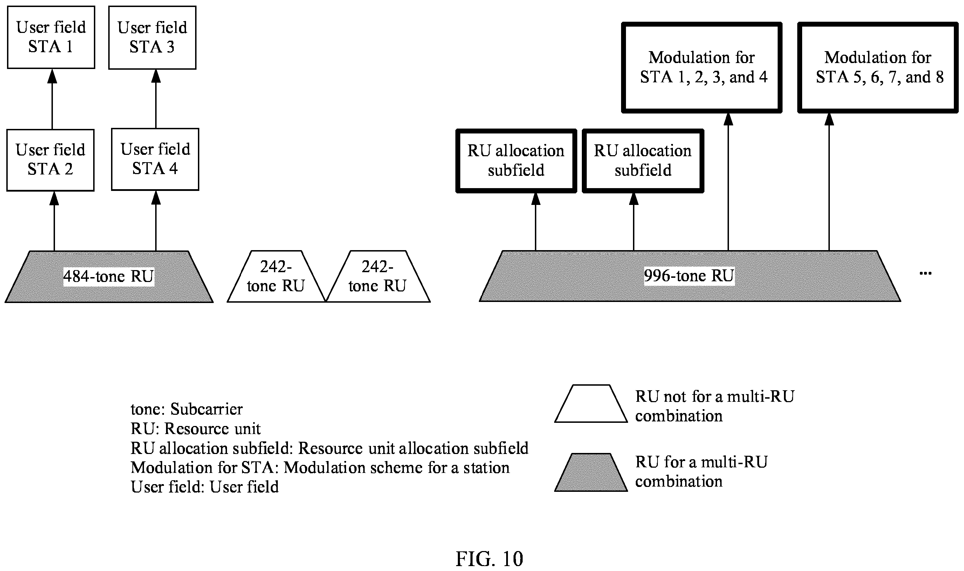

It should be noted that the EHT PPDU frame may indicate a plurality of MRUs. For example, the following provides description with reference to an RU combination mode shown in FIG. 10. In a plurality of RUs shown in FIG. 10, the 160 MHz bandwidth includes four RUs whose frequencies are in an ascending sequence, including a first RU (a 484-tone RU), a second RU (a first 242-tone RU), a third RU (a second 242-tone RU), and a fourth RU (a 996-tone RU). It may be understood that FIG. 10 shows only some RUs indicated by the EHT PPDU frame, there may be more RUs behind the fourth RU, and the RUs are not illustrated one by one herein.

The first RU and the fourth RU are simultaneously allocated to a STA 1, a STA 2, a STA 3, and a STA 4 as an MRU. In a possible implementation, the second RU and the third RU may also be simultaneously allocated to one or more other STAs as an MRU. It may be learned that a quantity of users on the MRU indicated by the EHT PPDU frame is different from a quantity of users on one MRU (except when the EHT PPDU frame includes only one MRU). In other words, the quantity of users on the MRU indicated by the EHT PPDU frame is a sum of quantities of users on all of a plurality of MRUs indicated by the EHT PPDU frame.

In another embodiment, the first MCS is a plurality of MCSs that are separately corresponding to a plurality of RUs other than the second RU in the at least two RUs allocated to the first device.

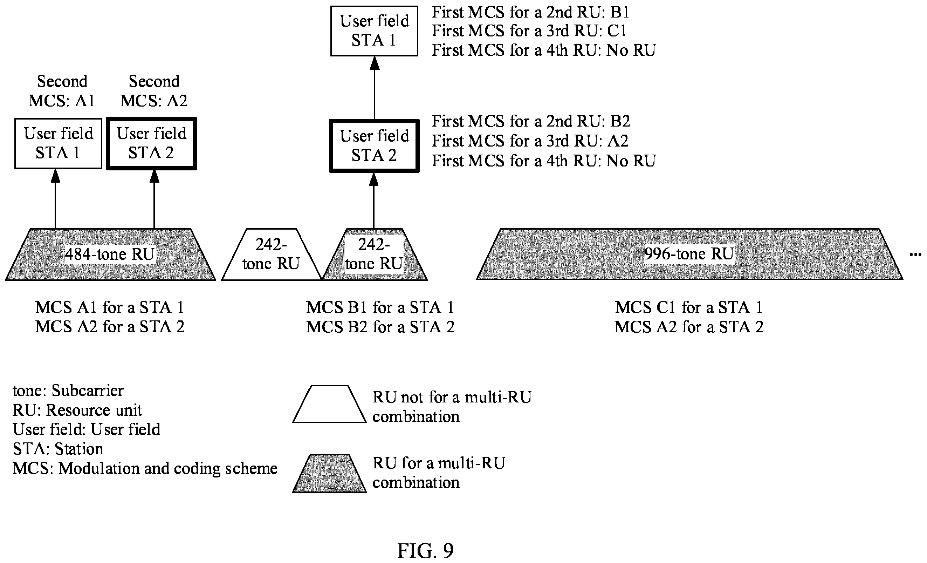

For example, FIG. 9 is a schematic diagram of another RU combination according to an embodiment of this application. FIG. 9 shows a case in which a 160 MHz bandwidth includes four RUs whose frequencies are in an ascending sequence, including a first RU (a 484-tone RU), a second RU (a first 242-tone RU), a third RU (a second 242-tone RU), and a fourth RU (a 996-tone RU). When a bandwidth is greater than 160 MHz, there may be more RUs behind the fourth RU, and the RUs are not illustrated one by one herein.

The first RU, the third RU, and the fourth RU are simultaneously allocated to a STA 1 and a STA 2 as an MRU.

Corresponding content channel information is described in the following Table 6. Refer to Table 6.

**Table 6**

| | | | | | | | | |
|---|---|---|---|---|---|---|---|---|
| CC 1 | 484+242+996 (1) | else | 484+242+996 (0) | 484+242+996 (0) | else | else | else | else |
| CC 2 | 484+242+996 (1) | 484+242+996 (2) | 484+242+996 (0) | 484+242+996 (0) | else | else | else | else |

In Table 6, 484+242+996 (1) in the first column corresponding to the CC 1 and 484+242+996 (1) in the first column corresponding to the CC 2 jointly represent the 484-tone RU shown in FIG. 9. The 484-tone RU, the second 242-tone RU, and the 996-tone RU are combined into an MRU. In 484+242+996 (1), (1) represents a quantity of users. Herein, at the 484-tone RU, a corresponding quantity of users is 1+1=2. In other words, the users include the STA 1 and the STA 2.
else in the second column corresponding to the CC 1 indicates that the second 242-tone RU shown in FIG. 9 is not allocated to the STA 1 or the STA 2.

484+242+996 (2) in the second column corresponding to the CC 2 represents the second 242-tone RU shown in FIG. 9. The second 242-tone RU, the 484-tone RU, and the 996-tone RU are combined into an MRU. In addition, at the 242-tone RU, a corresponding user field indicates an MCS different from that indicated by a user field in the 484-tone RU, and does not indicate a quantity of users.

484+242+996 (0) in the third column corresponding to the CC 1, 484+242+996 (0) in the third column corresponding to the CC 2, 484+242+996 (0) in the fourth column corresponding to the CC 1, and 484+242+996 (0) in the fourth column corresponding to the CC 2 jointly represent the 996-tone RU shown in FIG. 9. In addition, the 996-tone RU, the 484-tone RU, and the second 242-tone RU are combined into an MRU. In addition, at the 996-tone RU, a corresponding user field indicates an MCS different from that indicated by a user field in the 484-tone RU, and does not indicate a quantity of users.

In a possible implementation, the first device is a STA 1 shown in FIG. 9. With reference to the descriptions in the foregoing content, it may be determined that a multi-RU allocated to the STA 1 includes a 484-tone RU, a second 242-tone RU, and a 996-tone RU. In this case, the first MCS is B1 and C1, and the first RU is the second 242-tone RU. The second MCS is A1, and the second RU is the 484-tone RU. A plurality of RUs other than the second RU in the at least two RUs allocated to the first device are the first RU and the 996-tone RU. The first RU corresponds to B1. The 996-tone RU corresponds to C1. Specifically, the second RU may be an RU with a lowest frequency in the at least two RUs allocated to the first device (the STA 1).

In other words, the user field in which the second MCS is located may be a first user field in a plurality of user fields corresponding to the first device (the STA 1). The plurality of user fields corresponding to the first device (the STA 1) are user fields corresponding to the first 20 MHz bandwidth range and the fourth 20 MHz bandwidth range. Specifically, the user field corresponding to the first RU or the second RU in the at least two RUs allocated to the first device includes an ID of the first device. In other words, the user fields corresponding to the first 20 MHz bandwidth range and the fourth 20 MHz bandwidth range include the STA ID of the STA 1. It should be noted that the fourth 20 MHz bandwidth range is corresponding to two user fields. One of the two user fields includes the STA ID of the STA 1. The STA 1 may determine, based on the STA ID, a user field corresponding to the STA 1.

In another possible implementation, the first device is a STA 2 shown in FIG. 9. With reference to the descriptions in the foregoing content, it may be determined that a multi-RU allocated to the STA 2 includes a 484-tone RU, a second 242-tone RU, and a 996-tone RU. In this case, the first MCS is B1 and C1, and the first RU is the second 242-tone RU. The second MCS is A1, and the second RU is the 484-tone RU. A plurality of RUs other than the second RU in the at least two RUs allocated to the first device are the first RU and the 996-tone RU. The first RU corresponds to B2. The 996-tone RU corresponds to A2. Specifically, the second RU may be an RU with a lowest frequency in the at least two RUs allocated to the first device (the STA 2). This is merely an example. In another implementation, the second RU may alternatively be an RU with a highest frequency.

In other words, the user field in which the second MCS is located may be a first user field in a plurality of user fields corresponding to the first device (the STA 2). The plurality of user fields corresponding to the first device (the STA 2) are user fields corresponding to the second 20 MHz bandwidth range and the fourth 20 MHz bandwidth range. Specifically, the user field corresponding to the first RU or the second RU in the at least two RUs allocated to the first device includes an ID of the first device. In other words, the user fields corresponding to the second 20 MHz bandwidth range and the fourth 20 MHz bandwidth range include the STA ID of the STA 2. It should be noted that the fourth 20 MHz bandwidth range is corresponding to two user fields. One of the two user fields includes the STA ID of the STA 2. The STA 2 may determine, based on the STA ID, a user field corresponding to the STA 2.

In this embodiment, a user field is added to the user field corresponding to the first RU. The added user field may indicate MCSs of a plurality of RUs other than the second RU in the at least two RUs allocated to the first device. In this manner, an MCS of each of the plurality of RUs corresponding to the first device can be efficiently indicated.

The following describes the user field added in this embodiment. Specifically, the user field in which the first MCS is located may indicate a plurality of MCSs. In a feasible manner, the user field may indicate, in a preset sequence, the MCSs corresponding to the plurality of RUs other than the second RU in the at least two RUs allocated to the first device. For example, the preset sequence may be an ascending sequence of frequencies. Optionally, the second RU may be an RU with a lowest frequency in the at least two RUs allocated to the first device (the STA 2). In this case, the user field in which the first MCS is located may sequentially indicate MCSs corresponding to RUs with a second highest frequency, a third highest frequency, and a fourth highest frequency. For example, Table 7 indicates content (or referred to as a subfield) included in the user field in which the first MCS is located.

**Table 7**

| Content | Quantity of bits |
|---|---|
| Station identity (STA ID) | 11 |
| Modulation scheme for the RU with the second highest frequency (Modulation for 2^{nd} RU) | 3 |
| Modulation scheme for the RU with the third highest frequency (Modulation for 3^{rd} RU) | 3 |
| Modulation scheme for the RU with the fourth highest frequency (Modulation for 4^{th} RU) | 3 |
| Reserved (Reserved) | x (x indicates any value. If a total length of a user field is 21 bits, x may be 1.) |

In another possible implementation, the second RU may be an RU with a highest frequency in the at least two RUs allocated to the first device (the STA 2). The preset sequence may be a descending sequence of frequencies. In this case, the user field in which the first MCS is located may sequentially indicate MCSs corresponding to RUs with a second lowest frequency, a third lowest frequency, and a fourth lowest frequency.

It should be noted that bit rates of the plurality of RUs other than the second RU in the at least two RUs allocated to the first device may be the same as a bit rate in the second MCS of the second RU. Therefore, the bit rate may not need to be indicated in the user field. For a modulation scheme for each RU, refer to Table 8. Table 8 indicates a correspondence between a modulation scheme subfield index and a modulation scheme. The correspondence in Table 8 is merely an example. In actual application, there may be another correspondence.

**Table 8**

| Modulation scheme subfield index | Meaning |
|---|---|
| 0 (namely, 000) | BPSK |
| 1 (namely, 001) | QPSK |
| 2 (namely, 010) | 16-QAM |
| 3 (namely, 011) | 64-QAM |
| 4 (namely, 100) | 256-QAM |
| 5 (namely, 101) | 1024-QAM |
| 6 (namely, 110) | 4096-QAM |
| 7 (namely, 111) | The RU does not exist. |

It should be noted that the foregoing content describes an example of a manner in which the user field in which the first MCS is located may indicate a plurality of MCSs. In actual application, an indication manner is not limited to this indication manner. The user field in which the first MCS is located may alternatively indicate the plurality of MCSs in another manner. For example, the preset sequence may be a descending sequence. For another example, the reserved (Reserved) field may further indicate a quantity of RUs included in the multi-RU combination of the first device. For another example, 7 may further indicate a higher-order modulation scheme and the like.

Similar to the foregoing embodiment, to enable the first device to determine the actual quantity of users on the multi-RU combination allocated to the first device, the following design rule is proposed for a user field in an EHT PPDU frame in this embodiment of this application.

In a first manner, a quantity of user fields corresponding to the second RU in the plurality of RUs indicated by the RU allocation subfield are corresponding to an actual quantity of users. A user field corresponding to an RU other than the second RU is a user field indicating an MCS. With reference to the foregoing example, the second RU is a 484-tone RU. The user fields corresponding to the second RU include user fields corresponding to the first 20 MHz bandwidth range and the second 20 MHz bandwidth range. The quantity of user fields is 2. The quantity of user fields is the same as the quantity of users actually allocated to the multi-RU. In another example, if four users are allocated to the plurality of RUs, the user fields corresponding to the second RU include four user fields. One of the user fields corresponding to the second RU corresponds to one actual user. In this manner, the first device may determine the actual quantity of users based on the quantity of user fields corresponding to the second RU.

In a second manner, the user field in which the second MCS is located is a user field corresponding to third 20 MHz or a user field corresponding to fourth 20 MHz in a 996-tone RU. In this manner, a location of the user field in which the first MCS is located may be specified. The user field in which the first MCS is located is the user field indicating the MCS. In this manner, the first device may determine the actual quantity of users based on a quantity of user fields, other than the user field corresponding to the third 20 MHz and the user field corresponding to the fourth 20 MHz in the 996-tone RU, in all the user fields corresponding to the multi-RU allocated to the first device. For example, with reference to the foregoing example, in this design manner, for information in the content information, refer to Table 9.

**Table 9**

| | | | | | | | | |
|---|---|---|---|---|---|---|---|---|
| CC 1 | 484+242+996 (1) | else | 484+242+996 (0) | 484+242+996 (2) | else | else | else | else |
| CC 2 | 484+242+996 (1) | 484+242+996 (0) | 484+242+996 (0) | 484+242+996 (0) | else | else | else | else |

In Table 9, 484+242+996 (1) in the first column corresponding to the CC 1 and 484+242+996 (1) in the first column corresponding to the CC 2 jointly represent the 484-tone RU shown in FIG. 9. The 484-tone RU, the second 242-tone RU, and the 996-tone RU are combined into an MRU. In 484+242+996 (1), (1) represents a quantity of users. Herein, at the 484-tone RU, a corresponding quantity of users is 1+1=2. In other words, the users include the STA 1 and the STA 2.
else in the second column corresponding to the CC 1 indicates that the second 242-tone RU shown in FIG. 9 is not allocated to the STA 1 or the STA 2.

484+242+996 (0) in the second column corresponding to the CC 2 represents the second 242-tone RU shown in FIG. 9. The second 242-tone RU, the 484-tone RU, and the 996-tone RU are combined into an MRU. In 484+242+996(0), (0) represents a quantity of users. Herein, a corresponding quantity of users is 0.

484+242+996 (0) in the third column corresponding to the CC 1, 484+242+996 (0) in the third column corresponding to the CC 2, 484+242+996 (2) in the fourth column corresponding to the CC 1, and 484+242+996 (0) in the fourth column corresponding to the CC 2 jointly represent the 996-tone RU shown in FIG. 9. The 996-tone RU, the 484-tone RU, and the second 242-tone RU are combined into an MRU. At the 996-tone RU, 484+242+996 (0) in the third column corresponding to the CC 1 and 484+242+996 (0) in the third column corresponding to the CC 2 are corresponding to a user field corresponding to first 20 MHz and a user field corresponding to second 20 MHz in the 996-tone RU. In 484+242+996 (0), (0) represents a quantity of users. Herein, a corresponding quantity of users is 0. 484+242+996 (1) in the fourth column corresponding to the CC 1 and 484+242+996 (1) in the fourth column corresponding to the CC 2 are corresponding to the user field corresponding to the third 20 MHz and the user field corresponding to the fourth 20 MHz in the 996-tone RU. The two user fields indicate an MCS different from that indicated by the user field in the 484-tone RU, and do not indicate a quantity of users.

It should be noted that, for a multi-RU combination case corresponding to Table 9, refer to FIG. 9. However, a location of the user field corresponding to Table 9 is not completely the same as a location of the user field shown in FIG. 9. Specifically, a location of the user field corresponding to the 484-tone RU remains unchanged. A difference lies in that a user field in which the first MCS of the STA 1 is located is the user field corresponding to the third 20 MHz in the 996-tone RU, and a user field in which the first MCS of the STA 2 is located is the user field corresponding to the third 20 MHz in the 996-tone RU. The first device may determine the actual quantity of users based on a quantity of user fields, other than the user field corresponding to the third 20 MHz and the user field corresponding to the fourth 20 MHz in the 996-tone RU, in all the user fields corresponding to the multi-RU allocated to the first device. That is, the determined actual quantity of users is 2+0+0=2.

A difference from Table 6 is as follows. Table 6 specifies a location of the user field indicating the quantity of users, namely, the user field corresponding to the second RU. Remaining user fields are user fields indicating an MCS, and the remaining user fields do not indicate a quantity of users. However, Table 9 specifies a location of the user field indicating the MCS, namely, the user field in which the first MCS is located. The user field indicating the MCS does not indicate the quantity of users, and other user fields may indicate the quantity of users.

In another possible implementation, the actual quantity of users may alternatively be determined based on a device ID included in a user field corresponding to the multi-RU for the first device. Specifically, a quantity of users on one of MRUs indicated by the EHT PPDU frame is a difference between a total quantity of device IDs included in a user field corresponding to the MRU and a total quantity of repeated device IDs included in the user field corresponding to the MRU. For example, with reference to the foregoing example, the quantity of users on the multi-RU that is for the first device and that is indicated by the EHT PPDU frame is a difference between a total quantity (namely, 4) of STA IDs included in the user field corresponding to the multi-RU for the first device and a total quantity (namely, 2) of repeated STA IDs included in the user field corresponding to the multi-RU. That is, the determined actual quantity of users is 2.

In the foregoing two embodiments, the RU allocation subfield in the EHT PPDU frame may indicate a combination status of the plurality of RUs allocated to the first device. A user field corresponding to the first RU in the EHT PPDU frame may indicate a first MCS of a plurality of RUs other than the second RU in the at least two RUs allocated to the first device. A user field corresponding to the second RU may indicate a second MCS of the second RU. The first MCS is different from the second MCS. In the two embodiments, the user field indicating the MCS is added, so that the MCS of each of the plurality of RUs corresponding to the first device can be efficiently indicated.

This application further provides another method for indicating a modulation scheme corresponding to a multi-resource unit. A first device may receive an EHT PPDU frame from a second device. In this indication manner, another design solution is used for the EHT PPDU frame. Specifically, the EHT PPDU frame includes an EHT-SIG field. The EHT-SIG field includes a common field and a user specific field. The common field includes an RU allocation subfield. The user specific field includes a user field corresponding to the first device. The RU allocation subfield and the user field indicate at least two RUs allocated to the first device. The RU allocation subfield includes a preset bit. The preset bit indicates an MCS corresponding to at least one RU of the first device. The first device may determine, based on the EHT PPDU frame, a modulation and coding scheme (MCS) of each of a plurality of resource units (RUs) allocated to the first device.

In some embodiments, the preset bit is a bit corresponding to a resource unit allocation subfield corresponding to third 20 MHz and a bit corresponding to a resource unit allocation subfield corresponding to fourth 20 MHz in a 996-tone RU.

In a possible indication manner, the preset bit indicates, in a preset sequence, an MCS corresponding to a preset quantity of target devices. The first device is one of the preset quantity of target devices. This indication manner may be applicable to a case in which the multi-RU is allocated to a plurality of users. Because a maximum of eight different users are allocated to the 996-tone RU, the preset quantity may be 8. For example, FIG. 10 is a schematic diagram of another RU combination according to an embodiment of this application. FIG. 10 shows a case in which a 160 MHz bandwidth includes four RUs whose frequencies are in an ascending sequence, including a first RU (a 484-tone RU), a second RU (a first 242-tone RU), a third RU (a second 242-tone RU), and a fourth RU (a 996-tone RU). When a bandwidth is greater than 160 MHz, there may be more RUs behind the fourth RU, and the RUs are not illustrated one by one herein.

The first RU and the fourth RU are simultaneously allocated to a STA 1, a STA 2, a STA 3, and a STA 4 as an MRU.

Corresponding content channel information is described in the following Table 10.

**Table 10**

| | | | | | | | | |
|---|---|---|---|---|---|---|---|---|
| CC 1 | 484+996 (2) | else | 484+996 (0) | MCS for STA 1, 2, 3, and 4 | else | else | else | else |
| CC 2 | 484+996 (2) | else | 484+996 (0) | MCS for STA 5, 6, 7, and 8 | else | else | else | else |

In Table 10, 484+996 (2) in the first column corresponding to the CC 1 and 484+996 (2) in the first column corresponding to the CC 2 jointly represent the 484-tone RU shown in FIG. 10. The 484-tone RU and the 996-tone RU are combined into an MRU. In 484+242+996 (2), (2) represents a quantity of users. Herein, at the 484-tone RU, a corresponding quantity of users is 2+2=4. In other words, the users include the STA 1, the STA 2, the STA 3, and the STA 4.
else in the second column corresponding to the CC 1 and else in the second column corresponding to the CC 2 indicate that the second 242-tone RU and the third 242-tone RU shown in FIG. 10 are not allocated to the STA 1, the STA 2, the STA 3, or the STA 4.

484+996 (0) in the third column corresponding to CC 1 and 484+996 (0) in the third column corresponding to CC 2 jointly represent the 996-tone RU shown in FIG. 10. The 996-tone RU and the 484-tone RU are combined into an MRU. In 484+996 (0), (0) represents a quantity of users. Herein, at the 996-tone RU, a corresponding quantity of users is 0.

"MCS for STA 1, 2, 3, and 4" in the fourth column corresponding to the CC 1 indicates, in a sequence of the STA 1 to the STA 4, MCSs used by the four devices for the 996-tone RU. "MCS for STA 5, 6, 7, and 8" in the fourth column corresponding to the CC 2 indicates, in a sequence of the STA 5 to the STA 8, MCSs used by the four devices for the 996-tone RU.

In a possible implementation, the first device is a STA 1 shown in FIG. 10. With reference to the descriptions in the foregoing content, it may be determined that a multi-RU allocated to the STA 1 includes a 484-tone RU and a 996-tone RU. A total of four communication devices, namely, the STA 1, the STA 2, the STA 3, and the STA 4, are allocated to the multi-RU for the first device.

Specifically, user fields corresponding to the 484-tone RU may indicate MCSs used by the STA 1 to the STA 4 for the 484-tone RU. A bit corresponding to a resource unit allocation subfield corresponding to first 20 MHz and a bit corresponding to a resource unit allocation subfield corresponding to second 20 MHz in the 996-tone RU may indicate a multi-RU combination mode in the manner described in the foregoing content. A bit corresponding to a resource unit allocation subfield corresponding to third 20 MHz and a bit corresponding to a resource unit allocation subfield corresponding to fourth 20 MHz in the 996-tone RU indicate, in a sequence of the STA 1 to the STA 8, MCSs used by the eight target devices for the 996-tone RU.

In this indication manner, the bit corresponding to the resource unit allocation subfield corresponding to the third 20 MHz and the bit corresponding to the resource unit allocation subfield corresponding to the fourth 20 MHz in the 996-tone RU may be reused. That is, the bit at this location may represent another meaning. In other words, the first device prestores a first index table and a second index table. The first index table includes a first preset entry for indicating an MRU combination (refer to the descriptions in the foregoing content, and details are not described herein again). The second index table indicates a correspondence between a preset bit and an MCS. The first device may determine the MRU combination mode based on the first index table and based on the bit corresponding to the resource unit allocation subfield corresponding to the first 20 MHz and the bit corresponding to the resource unit allocation subfield corresponding to the second 20 MHz in the 996-tone RU. The MCS used by the first device for the 996-tone RU is determined by the first device based on the second index table and based on the bit corresponding to the resource unit allocation subfield corresponding to the third 20 MHz and the bit corresponding to the resource unit allocation subfield corresponding to the fourth 20 MHz in the 996-tone RU.

In a possible implementation, the bit corresponding to the resource unit allocation subfield corresponding to the first 20 MHz and the bit corresponding to the resource unit allocation subfield corresponding to the second 20 MHz in the 996-tone RU may alternatively indicate an RU combination in another indication manner described in the foregoing content. In other words, the RU allocation subfield further includes an RU combination indication field. The RU combination indication field indicates at least one of the following: whether an RU indicated by the RU allocation subfield belongs to an RU combination, and that the RU belongs to an RU combination group. For example, Table 11 includes information in another content channel.

**Table 11**

| | | | | | | | | |
|---|---|---|---|---|---|---|---|---|
| CC 1 | 484-(01) (2) | else | 996-(01) (0) | MCS for STA 1, 2, 3, and 4 | else | else | else | else |
| CC 2 | 484-(01) (2) | else | 996-(01) (0) | MCS for STA 5, 6, 7, and 8 | else | else | else | else |

In Table 11, 484-(01) (2) in the first column corresponding to the CC 1 and 484-(01) (2) in the first column corresponding to the CC 2 jointly represent the 484-tone RU shown in FIG. 10. In 484-(01) (2), (01) indicates that the 484-tone RU belongs to an RU combination group 1, and (2) represents a quantity of users. Herein, at the 484-tone RU, a corresponding quantity of users is 2+2=4. In other words, the users include the STA 1, the STA 2, the STA 3, and the STA 4.
else in the second column corresponding to the CC 1 and else in the second column corresponding to the CC 2 indicate that the second 242-tone RU and the third 242-tone RU shown in FIG. 10 are not allocated to the STA 1, the STA 2, the STA 3, or the STA 4.

996-(01) (0) in the third column corresponding to the CC 1 and 996-(01) (0) in the third column corresponding to the CC 2 jointly represent the 996-tone RU shown in FIG. 10. In 996-(01) (0), (01) indicates that the 996-tone RU belongs to an RU combination group 1, and (0) represents a quantity of users. Herein, at 996-tone RU, a corresponding quantity of users is 0.

"MCS for STA 1, 2, 3, and 4" in the fourth column corresponding to the CC 1 indicates, in a sequence of the STA 1 to the STA 4, MCSs used by the four devices for the 996-tone RU. "MCS for STA 5, 6, 7, and 8" in the fourth column corresponding to the CC 2 indicates, in a sequence of the STA 5 to the STA 8, MCSs used by the four devices for the 996-tone RU. In this indication manner, locations of the 484-tone RU and the 996-tone RU may be further determined. In addition, content of the first column and the third column that correspond to the CC 1 and content of the first column and the third column that correspond to the CC 2 jointly indicate that the 484-tone RU and the 996-tone RU are combined into an MRU.

The following describes a correspondence between a preset bit and an MCS. Specifically, bits corresponding to the resource unit allocation subfield corresponding to 20 MHz are 8 bits. Because a maximum of eight different users are allocated to the 996-tone RU, every two bits in the eight bits may represent a modulation scheme of a user. In this case, the reused preset bit may indicate modulation schemes of the eight users. For a correspondence between every two bits and a modulation scheme, refer to Table 12 or Table 13.

**Table 12**

| Modulation indication (Modulation Indication) | Meaning (Meaning) |
|---|---|
| 0 (namely, 00) | Not change |
| 1 (namely, 01) | BPSK |
| 2 (namely, 10) | 16-QAM |
| 3 (namely, 11) | 256-QAM |

**Table 13**

| Modulation indication (Modulation Indication) | Meaning (Meaning) |
|---|---|
| 0 (namely, 00) | Not change |
| 1 (namely, 01) | QPSK |
| 2 (namely, 10) | 64-QAM |
| 3 (namely, 11) | 1024-QAM |

In another possible indication manner, the preset bit indicates, in a preset sequence, an MCS corresponding to a preset quantity of RUs. The preset quantity of RUs include the at least two RUs. This indication manner may be applicable to a case in which the multi-RU is allocated to a single user. Generally, a maximum of four RUs are allocated to one communication device, and the preset quantity may be 4.

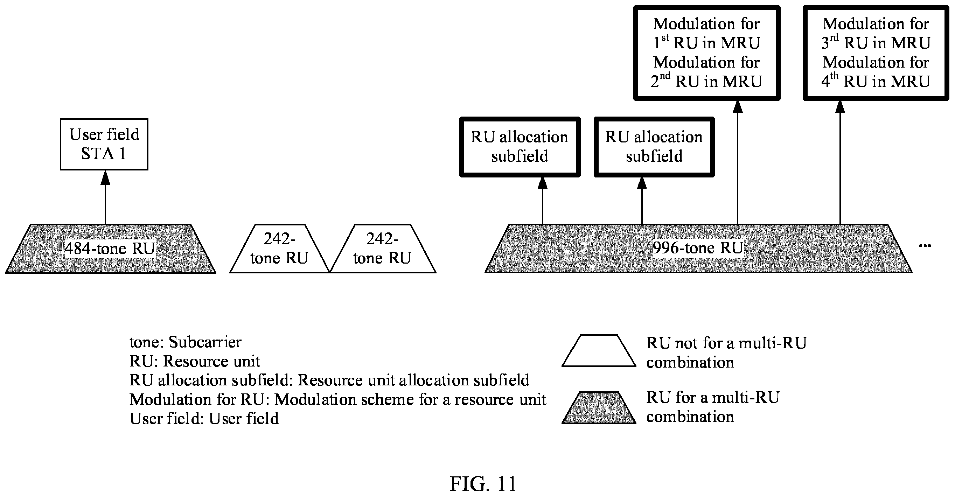

For example, FIG. 11 is a schematic diagram of another RU combination according to an embodiment of this application. FIG. 11 shows a case in which a 160 MHz bandwidth includes four RUs whose frequencies are in an ascending sequence, including a first RU (a 484-tone RU), a second RU (a first 242-tone RU), a third RU (a second 242-tone RU), and a fourth RU (a 996-tone RU). When a bandwidth is greater than 160 MHz, there may be more RUs behind the fourth RU, and the RUs are not illustrated one by one herein.

The first RU and the fourth RU are allocated to the STA 1 as an MRU, and are not allocated to another communication device.

Corresponding content channel information is described in the following Table 14.

**Table 14**

| | | | | | | | | |
|---|---|---|---|---|---|---|---|---|
| CC 1 | 484-(01) (1) | else | 996-(01) (0) | Modulation scheme for the first RU and the second RU | else | else | else | else |
| CC 2 | 484-(01) (0) | else | 996-(01) (0) | Modulation scheme for the third RU and the fourth RU | else | else | else | else |

In Table 14, 484-(01) (1) in the first column corresponding to the CC 1 and 484-(01) (0) in the first column corresponding to the CC 2 jointly represent the 484-tone RU shown in FIG. 11. In 484-(01) (1), (01) indicates that the 484-tone RU belongs to an RU combination group 1, and (1) represents a quantity of users. In 484-(01) (0), (01) indicates that the 484-tone RU belongs to an RU combination group 1, and (0) represents a quantity of users. Herein, at the 484-tone RU, a corresponding quantity of users is 1+0=1. In other words, the user is the STA 1.
else in the second column corresponding to the CC 1 and else in the second column corresponding to the CC 2 indicate that the second 242-tone RU and the third 242-tone RU shown in FIG. 11 are not allocated to the STA 1.

996-(01) (0) in the third column corresponding to the CC 1 and 996-(01) (0) in the third column corresponding to the CC 2 jointly represent the 996-tone RU shown in FIG. 11. In 996-(01) (0), (01) indicates that the 996-tone RU belongs to an RU combination group 1, and (0) represents a quantity of users. Herein, at 996-tone RU, a corresponding quantity of users is 0.

"Modulation scheme for the first RU and the second RU" in the fourth column corresponding to the CC 1 indicates MCSs of the two RUs in a sequence of the first RU and the second RU. "Modulation scheme for the third RU and the fourth RU" in the fourth column corresponding to the CC 2 indicates MCSs of the two RUs in a sequence of the third RU and the fourth RU.

The first device is the STA 1 shown in FIG. 11. With reference to the descriptions in the foregoing content, it may be determined that a multi-RU allocated to the STA 1 includes a 484-tone RU and a 996-tone RU. The multi-RU allocated to the first device is allocated only to the first device, and is not allocated to another communication device.

Specifically, user fields corresponding to the 484-tone RU may indicate MCSs used by the STA 1 for the 484-tone RU. A bit corresponding to a resource unit allocation subfield corresponding to first 20 MHz and a bit corresponding to a resource unit allocation subfield corresponding to second 20 MHz in the 996-tone RU may indicate a multi-RU combination mode. A bit corresponding to a resource unit allocation subfield corresponding to third 20 MHz and a bit corresponding to a resource unit allocation subfield corresponding to fourth 20 MHz in the 996-tone RU indicate, in an ascending sequence of frequencies, MCSs of the first RU, the second RU, the third RU, and the fourth RU that are allocated to the first device.

The following describes a correspondence between a preset bit and an MCS. Specifically, bits corresponding to the resource unit allocation subfield corresponding to 20 MHz are 8 bits. Generally, a maximum of four RUs are allocated to one communication device, and every four bits in the eight bits may represent a modulation scheme for one RU. In this case, the reused preset bit may indicate modulation schemes of the four RUs. For a correspondence between every four bits and a modulation scheme, refer to Table 15.

**Table 15**

| Modulation indication (Modulation Indication) | Meaning (Meaning) |
|---|---|
| 0 (namely, 0000) | BPSK |
| 1 (namely, 0001) | QPSK |
| 2 (namely, 0010) | 16-QAM |
| 3 (namely, 0011) | 64-QAM |
| 4 (namely, 0100) | 256-QAM |
| 5 (namely, 0101) | 1024-QAM |
| 6 (namely, 0110) | 4096-QAM |
| 7 (namely, 0111) | Not change |

It should be noted that the foregoing content describes an example of the correspondence between every four bits and a modulation scheme. In actual application, the correspondence is not limited to this correspondence. For example, 7 may further indicate a higher-order modulation scheme. For another example, 0 may correspond to QPSK, and 1 may correspond to BPSK.

According to the method in the foregoing embodiment, the bit corresponding to the resource unit allocation subfield corresponding to the third 20 MHz and the bit corresponding to the resource unit allocation subfield corresponding to the fourth 20 MHz in the 996-tone RU may be reused for indicating an MCS of an RU. This does not increase overheads and can improve bit use efficiency of the EHT PPDU frame.

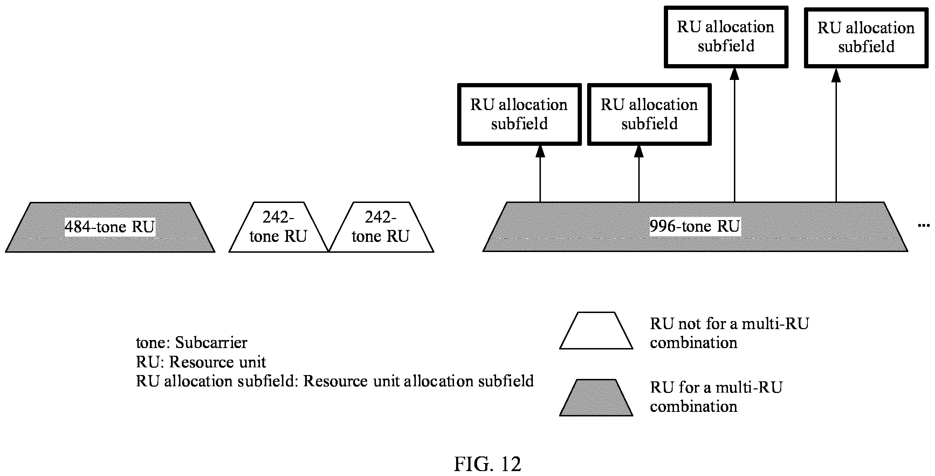

In another possible indication manner, the first device may prestore a third index table. The third index table includes a second preset entry. The second preset entry corresponds to an MCS. For example, FIG. 12 is a schematic diagram of another RU combination according to an embodiment of this application. It should be noted that a bit corresponding to a resource unit allocation subfield corresponding to first 20 MHz and a bit corresponding to a resource unit allocation subfield corresponding to second 20 MHz in a 996-tone RU may indicate a multi-RU combination mode in the manner described in the foregoing content. A bit corresponding to a resource unit allocation subfield corresponding to third 20 MHz and a bit corresponding to a resource unit allocation subfield corresponding to fourth 20 MHz in the 996-tone RU may indicate an entry in the second preset entry. Optionally, the third index table may also include a first preset entry for indicating an MRU combination (refer to the descriptions in the foregoing content, and details are not described herein again).

Specifically, meanings represented by the second preset entry may include the following four types:
(1) indicating an MCS/modulation scheme of a single user for a corresponding RU;
(2) indicating an MCS/modulation scheme of a single user for a plurality of RUs;
(3) indicating an MCS/modulation scheme of a plurality of users for a corresponding RU; and
(4) indicating an MCS/modulation scheme of a plurality of users for a plurality of RUs.

For example, when the second preset entry indicates the MCS/modulation scheme of the single user for the corresponding RU, a quantity of second preset entries may be 7. Table 16 indicates a correspondence between a modulation scheme and an entry quantity.

**Table 16**

| Modulation scheme | Entry quantity |
|---|---|
| BPSK | 1 |
| QPSK | 1 |
| 16-QAM | 1 |
| 64-QAM | 1 |
| 256-QAM | 1 |
| 1024-QAM | 1 |
| 4096-QAM | 1 |

For example, if the bit corresponding to the resource unit allocation subfield corresponding to the third 20 MHz in the 996-tone RU is a second preset entry corresponding to BPSK, it indicates that a modulation scheme used by the device for the 996-tone RU is BPSK.

It should be noted that the second preset entry has another indication meaning, and different meanings may correspond to different quantities of second preset entries. For example, the second preset entry may indicate an MCS/modulation scheme of a single user for a plurality of RUs. A quantity of second preset entries may be 28. For example, one second preset entry may indicate that a modulation scheme of a single user for an RU with a lowest frequency is BPSK. For another example, one second preset entry may indicate that a modulation scheme of a single user for an RU with a second highest frequency is BPSK. Indication meanings of other second preset entries are not described herein again.

According to the method in the foregoing embodiment, meanings represented by the bit corresponding to the resource unit allocation subfield corresponding to the third 20 MHz and the bit corresponding to the resource unit allocation subfield corresponding to the fourth 20 MHz in the 996-tone RU may be added. These bits may indicate an MCS or a modulation scheme of a single RU or a plurality of RUs. This does not increase overheads and can improve bit use efficiency of the EHT PPDU frame.

To implement functions in the foregoing methods provided in embodiments of this application, the first device and the second device may include a hardware structure and a software module, and implement the foregoing functions in a form of the hardware structure, the software module, or a combination of the hardware structure and the software module. A function in the foregoing functions may be performed in a form of the hardware structure, the software module, or a combination of the hardware structure and the software module.

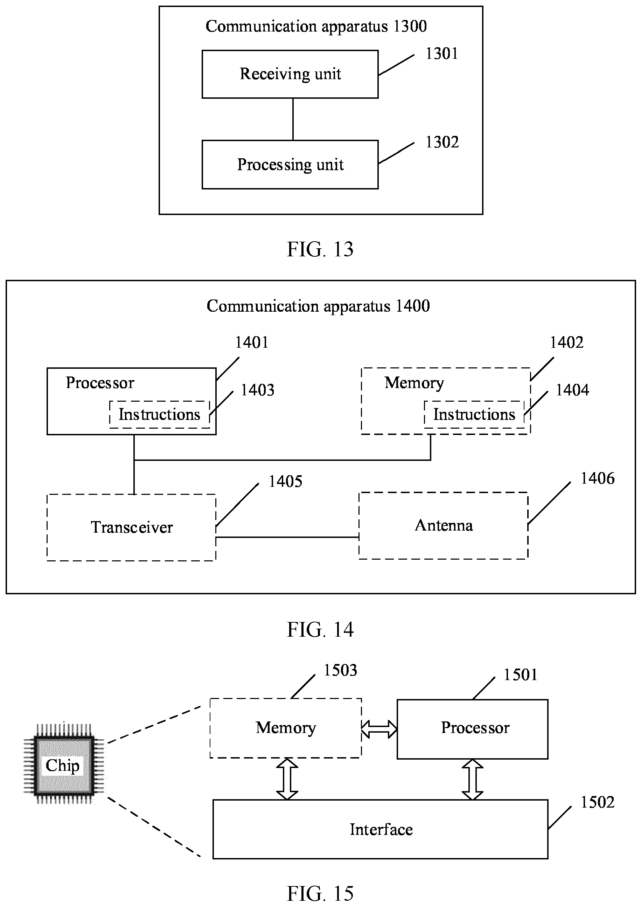

FIG. 13 is a schematic diagram of a structure of a communication apparatus according to an embodiment of this application. The communication apparatus 1300 may be a station, or may be an apparatus in a station, or may be an apparatus that can be used in cooperation an access point. The communication apparatus 1300 may alternatively be an access point, or may be an apparatus in an access point, or may be an apparatus that can be used in cooperation with a station. The communication apparatus 1300 may alternatively be a multi-link device. The communication apparatus 1300 includes a receiving unit 1301 and a processing unit 1302. Specifically:

### In an implementation:

The receiving unit 1301 is configured to receive an EHT PPDU frame sent by a second device. The EHT PPDU frame includes an EHT-SIG field. The EHT-SIG field includes a common field and a user specific field. The common field includes a resource unit RU allocation subfield. The user specific field includes a user field corresponding to the communication apparatus. Specifically, for an operation performed by the receiving unit 1301, refer to the descriptions in step S502 in the method shown in FIG. 5. For the EHT PPDU frame, refer to the EHT PPDU frame described in the foregoing first method for indicating a modulation scheme corresponding to a multi-resource unit.

The processing unit 1302 is configured to determine, based on the RU allocation subfield and the user field, at least two RUs allocated to the communication apparatus. The at least two RUs includes a first RU and a second RU.

The processing unit 1302 is further configured to determine, based on the user field, that a first MCS in a user field corresponding to the first RU is an MCS of an RU other than the second RU in the at least two RUs allocated to the communication apparatus.

The processing unit 1302 is further configured to determine, based on the user field, that a second MCS in a user field corresponding to the second RU is an MCS of the second RU. The first MCS is different from the second MCS. Specifically, for a determining manner of the processing unit 1302, refer to the descriptions in the foregoing first method for indicating a modulation scheme corresponding to a multi-resource unit.

In some embodiments, the at least two RUs in a plurality of RUs indicated by the RU allocation subfield are allocated to the communication apparatus. The user field corresponding to the first RU or the second RU in the at least two RUs indicates an ID of the communication apparatus.

In some embodiments, the RU allocation subfield further includes an RU combination indication field for indicating at least one of the following: whether an RU indicated by the RU allocation subfield belongs to an RU combination, and that the RU belongs to an RU combination group.

In some embodiments, the first MCS is a plurality of MCSs that are separately corresponding to a plurality of RUs other than the second RU in the at least two RUs allocated to the communication apparatus.

In some embodiments, the first RU is an RU with a lowest frequency in the at least two RUs allocated to the communication apparatus.

In some embodiments, the processing unit 1301 determines that the at least two RUs allocated to the communication apparatus are RUs not less than 242-tone.

In some embodiments, the user field in which the second MCS is located is a user field corresponding to third 20 MHz or a user field corresponding to fourth 20 MHz in a 996-tone RU.

In some embodiments, a quantity of user fields corresponding to the first RU in the plurality of RUs indicated by the RU allocation subfield are corresponding to an actual quantity of users. A user field corresponding to an RU other than the first RU is a user field indicating an MCS.

In some embodiments, a quantity of users on one of MRUs indicated by the EHT PPDU frame is a difference between a total quantity of device IDs included in a user field corresponding to the MRU and a total quantity of repeated device IDs included in the user field corresponding to the MRU.

### In another implementation:

The receiving unit 1301 is configured to receive an EHT PPDU frame sent by a second device. The EHT PPDU frame includes an EHT-SIG field. The EHT-SIG field includes a common field and a user specific field. The common field includes an RU allocation subfield. The user specific field includes a user field corresponding to the communication apparatus. For the EHT PPDU frame, refer to the EHT PPDU frame described in the foregoing second method for indicating a modulation scheme corresponding to a multi-resource unit.

The processing unit 1302 is configured to determine, based on the RU allocation subfield and the user field, at least two RUs allocated to the communication apparatus.

The RU allocation subfield includes a preset bit.

The processing unit 1302 is configured to determine, based on the preset bit, an MCS corresponding to at least one RU of the communication apparatus.

In some embodiments, the preset bit indicates, in a preset sequence, an MCS corresponding to a preset quantity of target devices. The communication apparatus is one of the preset quantity of target devices.

In some embodiments, the preset bit indicates, in a preset sequence, an MCS corresponding to a preset quantity of RUs. The preset quantity of RUs include the at least two RUs.

In some embodiments, the communication apparatus prestores an index table. The index table indicates a correspondence between the preset bit and the MCS.

In some embodiments, the preset bit is a bit corresponding to a resource unit allocation subfield corresponding to third 20 MHz and a bit corresponding to a resource unit allocation subfield corresponding to fourth 20 MHz in a 996-tone RU.

It should be noted that the operations performed by the units of the communication apparatus shown in FIG. 13 may be the related content in the foregoing method embodiments. Details are not described herein again. The foregoing units may be implemented in a manner of hardware, software, or a combination of software and hardware. In an embodiment, the functions of the receiving unit 1301 and the processing unit 1302 in the foregoing content may be implemented by one or more processors in the communication apparatus 1300.

The EHT PPDU frame may be received from the second device by using the communication apparatus shown in FIG. 13. The communication apparatus may determine, based on the EHT PPDU frame, an MCS of each of a plurality of RUs allocated to the communication apparatus.

FIG. 14 is a schematic diagram of a structure of another communication apparatus according to an embodiment of this application. The communication apparatus 1400 may be an access point, or may be a station, or may be a chip, a chip system, a processor, or the like that supports an access point in implementing the foregoing method, or may be a chip, a chip system, a processor, or the like that supports a station in implementing the foregoing method. The apparatus may be configured to implement the methods described in the foregoing method embodiments. For details, refer to the descriptions in the foregoing method embodiments.

The communication apparatus 1400 includes one or more processors 1401. The processor 1401 may be a general-purpose processor, a dedicated processor, or the like. The processor 1401 may be configured to control a communication apparatus (for example, an access point, an access point chip, a station, or a station chip), execute a software program, and process data in the software program.

Optionally, the communication apparatus 1400 may include one or more memories 1402. The memory may store instructions 1404. The instructions maybe run on the processor 1401, so that the communication apparatus 1400 performs the method described in the foregoing method embodiments. Optionally, the memory 1402 may further store data. The processor 1401 and the memory 1402 may be separately disposed, or may be integrated.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The processor 1401 is configured to perform, by using the transceiver 1405, an operation of receiving the EHT PPDU frame in step S502 in FIG. 5 or an operation of receiving the EHT PPDU frame in the second method for indicating a modulation scheme corresponding to a multi-resource unit.

In an implementation, the processor 1401 is configured to determine, based on the RU allocation subfield and the user field in the received EHT PPDU frame, at least two RUs allocated to the communication apparatus. The at least two RUs include a first RU and a second RU. The processor 1401 is further configured to determine, based on the user field, that a first MCS in a user field corresponding to the first RU is an MCS of an RU other than the second RU in the at least two RUs allocated to the communication apparatus. The processor 1401 is further configured to determine, based on the user field, that a second MCS in a user field corresponding to the second RU is an MCS of the second RU. The first MCS is different from the second MCS.

In another implementation, the processor 1401 is configured to determine, based on the RU allocation subfield and the user field in the EHT PPDU frame, at least two RUs allocated to the communication apparatus. The RU allocation subfield includes a preset bit. The processor 1401 is further configured to determine, based on the preset bit, an MCS corresponding to at least one RU of the communication apparatus.

The operations performed by the processor 1401 may be the related content in the foregoing method embodiments. Details are not described herein again.

In another possible design, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1401 may store instructions 1403. When the instructions 1403 are executed on the processor 1401, the communication apparatus 1400 may be enabled to perform the method described in the foregoing method embodiments. The instructions 1403 may be built into the processor 1401. In this case, the processor 1401 may be implemented by using hardware.

In another possible design, the communication apparatus 1400 may include a circuit. The circuit may implement the transmission, reception, or communication function in the foregoing method embodiments.

The processor and the transceiver that are described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like.

The communication apparatus described in the foregoing embodiment may be an access point or a station. However, a scope of the communication apparatus described in this application is not limited thereto, and a structure of the communication apparatus may not be limited in FIG. 14. The communication apparatus may be an independent device or may be a part of a large device. For example, the communication apparatus may be:
(1) an independent integrated circuit IC, a chip, or a chip system or subsystem;
(2) a set including one or more ICs, where optionally, the IC set may further include a storage component configured to store data and instructions;
(3) an ASIC, for example, a modem (Modem);
(4) a module that can be embedded in another device;
(5) a receiver, an intelligent terminal, a wireless device, a handheld device, a mobile unit, a vehicle-mounted device, a cloud device, an artificial intelligence device, and the like; or
(6) another device, or the like.

For a case in which the communication apparatus may be a chip or a chip system, refer to a schematic diagram of a structure of a chip shown in FIG. 15. The chip 1500 shown in FIG. 15 includes a processor 1501 and an interface 1502. There may be one or more processors 1501, and there may be a plurality of interfaces 1502.

A case in which the chip is configured to implement the function of the first device in embodiments of this application is described below.

In an implementation, the interface 1502 is configured to receive an EHT PPDU frame sent by a second device. The EHT PPDU frame includes an EHT-SIG field. The EHT-SIG field includes a common field and a user specific field. The common field includes a resource unit RU allocation subfield. The user specific field includes a user field corresponding to the communication apparatus. The processor 1501 is configured to determine, based on the RU allocation subfield and the user field, at least two RUs allocated to the communication apparatus. The at least two RUs include a first RU and a second RU. The processor 1501 is further configured to determine, based on the user field, that a first MCS in a user field corresponding to the first RU is an MCS of an RU other than the second RU in the at least two RUs allocated to the communication apparatus. The processor 1501 is further configured to determine, based on the user field, that a second MCS in a user field corresponding to the second RU is an MCS of the second RU. The first MCS is different from the second MCS.

In another implementation, the interface 1502 is configured to receive an EHT PPDU frame sent by a second device. The EHT PPDU frame includes an EHT-SIG field. The EHT-SIG field includes a common field and a user specific field. The common field includes an RU allocation subfield. The user specific field includes a user field corresponding to the communication apparatus. The processor 1501 is configured to determine, based on the RU allocation subfield and the user field, at least two RUs allocated to the communication apparatus. The RU allocation subfield includes a preset bit. The processor 1501 is further configured to determine, based on the preset bit, an MCS corresponding to at least one RU of the communication apparatus.

Optionally, the chip further includes a memory 1503. The memory 1503 is configured to store program instructions and data that are necessary for the terminal device.

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium. The computer-readable storage medium stores a computer program, and when the computer-readable storage medium is executed by a computer, a function of any one of the foregoing method embodiments is implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer instructions. When the computer instructions are loaded and executed on the computer, all or a part of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

A person of ordinary skill in the art may understand that various reference numerals such as "first" and "second" in this application are merely used for differentiation for ease of description, and are not used to limit a scope of embodiments of this application, or represent a sequence.

The correspondences shown in the tables in this application may be configured, or may be predefined. Values of the information in the tables are only examples, and other values may be configured. This is not limited in this application. When a correspondence between information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for indicating a modulation scheme corresponding to a multi-resource unit, comprising:
receiving, by a first device, an extremely high throughput physical layer protocol data unit EHT PPDU frame sent by a second device, wherein the EHT PPDU frame comprises an extremely high throughput signal EHT-SIG field, the EHT-SIG field comprises a common field and a user specific field, the common field comprises a resource unit RU allocation subfield, and the user specific field comprises a user field corresponding to the first device;
the RU allocation subfield and the user field indicate at least two RUs allocated to the first device, and the at least two RUs comprise a first RU and a second RU;
a first modulation and coding scheme MCS in a user field corresponding to the first RU is an MCS of an RU other than the second RU in the at least two RUs allocated to the first device;
a second MCS in a user field corresponding to the second RU is an MCS of the second RU; and
the first MCS is different from the second MCS.

2. The method according to claim 1, wherein the at least two RUs in a plurality of RUs indicated by the RU allocation subfield are allocated to the first device, and the user field corresponding to the first RU or the second RU in the at least two RUs indicates an ID of the first device.

3. The method according to claim 1, wherein the RU allocation subfield further comprises an RU combination indication field for indicating at least one of the following: whether an RU indicated by the RU allocation subfield belongs to an RU combination, and that the RU belongs to an RU combination group.

4. The method according to claim 1, 2, or 3, wherein the first MCS is a plurality of MCSs that are separately corresponding to a plurality of RUs other than the second RU in the at least two RUs allocated to the first device.

5. The method according to claim 1, 2, or 3, wherein the first RU is an RU with a lowest frequency in the at least two RUs allocated to the first device.

6. The method according to claim 1, 2, or 3, wherein the at least two RUs allocated to the first device are RUs not less than 242-tone.

7. The method according to any one of claims 4 to 6, wherein the user field in which the first MCS is located is a user field corresponding to third 20 MHz or a user field corresponding to fourth 20 MHz in a 996-tone RU.

8. The method according to any one of claims 4 to 7, wherein a quantity of user fields corresponding to the first RU in the plurality of RUs indicated by the RU allocation subfield are corresponding to an actual quantity of users; and
a user field corresponding to an RU other than the first RU is a user field indicating an MCS.

9. The method according to any one of claims 1 to 8, wherein a quantity of users on one multi-resource unit MRU of MRUs indicated by the EHT PPDU frame is a difference between a total quantity of device IDs comprised in a user field corresponding to the MRU and a total quantity of repeated device IDs comprised in the user field corresponding to the MRU.

10. A method for indicating a modulation scheme corresponding to a multi-resource unit, comprising:
receiving, by a first device, an EHT PPDU frame sent by a second device, wherein
the EHT PPDU frame comprises an EHT-SIG field, the EHT-SIG field comprises a common field and a user specific field, the common field comprises an RU allocation subfield, and the user specific field comprises a user field corresponding to the first device;
the RU allocation subfield and the user field indicate at least two RUs allocated to the first device; and
the RU allocation subfield comprises a preset bit, and the preset bit indicates an MCS corresponding to at least one RU of the first device.

11. The method according to claim 10, wherein the preset bit indicates, in a preset sequence, an MCS corresponding to a preset quantity of target devices, and the first device is one of the preset quantity of target devices.

12. The method according to claim 10, wherein the preset bit indicates, in a preset sequence, an MCS corresponding to a preset quantity of RUs, and the preset quantity of RUs comprise the at least two RUs.

13. The method according to claim 10, wherein the first device prestores an index table, and the index table indicates a correspondence between the preset bit and the MCS.

14. The method according to any one of claims 10 to 13, wherein the preset bit is a bit corresponding to a resource unit allocation subfield corresponding to third 20 MHz and a bit corresponding to a resource unit allocation subfield corresponding to fourth 20 MHz in a 996-tone RU.

15. A communication apparatus, wherein the communication apparatus comprises a receiving unit and a processing unit;
the receiving unit is configured to receive an EHT PPDU frame sent by a second device, wherein the EHT PPDU frame comprises an EHT-SIG field, the EHT-SIG field comprises a common field and a user specific field, the common field comprises a resource unit RU allocation subfield, and the user specific field comprises a user field corresponding to the communication apparatus;
the processing unit is configured to determine, based on the RU allocation subfield and the user field, at least two RUs allocated to the communication apparatus, and the at least two RUs comprise a first RU and a second RU;
the processing unit is further configured to determine, based on the user field, that a first modulation and coding scheme MCS in a user field corresponding to the first RU is an MCS of an RU other than the second RU in the at least two RUs allocated to the communication apparatus;
the processing unit is further configured to determine, based on the user field, that a second MCS in a user field corresponding to the second RU is an MCS of the second RU; and
the first MCS is different from the second MCS.

16. The communication apparatus according to claim 15, wherein the at least two RUs in a plurality of RUs indicated by the RU allocation subfield are allocated to the communication apparatus, and the user field corresponding to the first RU or the second RU in the at least two RUs indicates an ID of the communication apparatus.

17. The method according to claim 15, wherein the RU allocation subfield further comprises an RU combination indication field for indicating at least one of the following: whether an RU indicated by the RU allocation subfield belongs to an RU combination, and that the RU belongs to an RU combination group.

18. The communication apparatus according to claim 15, 16, or 17, wherein the first MCS is a plurality of MCSs that are separately corresponding to a plurality of RUs other than the second RU in the at least two RUs allocated to the communication apparatus.

19. The communication apparatus according to claim 15, 16, or 17, wherein the first RU is an RU with a lowest frequency in the at least two RUs allocated to the communication apparatus.

20. The communication apparatus according to claim 15, 16, or 17, wherein the processing unit determines that the at least two RUs allocated to the communication apparatus are RUs not less than 242-tone.

21. The communication apparatus according to any one of claims 18 to 20, wherein the user field in which the first MCS is located is a user field corresponding to third 20 MHz or a user field corresponding to fourth 20 MHz in a 996-tone RU.

22. The communication apparatus according to any one of claims 18 to 21, wherein a quantity of user fields corresponding to the first RU in the plurality of RUs indicated by the RU allocation subfield are corresponding to an actual quantity of users; and
a user field corresponding to an RU other than the first RU is a user field indicating an MCS.

23. The communication apparatus according to any one of claims 15 to 22, wherein a quantity of users on one of MRUs indicated by the EHT PPDU frame is a difference between a total quantity of device IDs comprised in a user field corresponding to the MRU and a total quantity of repeated device IDs comprised in the user field corresponding to the MRU.

24. A communication apparatus, wherein the communication apparatus comprises a receiving unit and a processing unit;
the receiving unit is configured to receive an EHT PPDU frame sent by a second device, wherein the EHT PPDU frame comprises an EHT-SIG field, the EHT-SIG field comprises a common field and a user specific field, the common field comprises an RU allocation subfield, and the user specific field comprises a user field corresponding to the communication apparatus;
the processing unit is configured to determine, based on the RU allocation subfield and the user field, at least two RUs allocated to the communication apparatus;
the RU allocation subfield comprises a preset bit; and
the processing unit is further configured to determine, based on the preset bit, an MCS corresponding to at least one RU of the communication apparatus.

25. The communication apparatus according to claim 24, wherein the preset bit indicates, in a preset sequence, an MCS corresponding to a preset quantity of target devices, and the communication apparatus is one of the preset quantity of target devices.

26. The communication apparatus according to claim 24, wherein the preset bit indicates, in a preset sequence, an MCS corresponding to a preset quantity of RUs, and the preset quantity of RUs comprise the at least two RUs.

27. The communication apparatus according to claim 24, wherein the communication apparatus further comprises a storage unit, the storage unit is configured to store an index table, and the index table indicates a correspondence between the preset bit and the MCS.

28. The communication apparatus according to any one of claims 24 to 27, wherein the preset bit is a bit corresponding to a resource unit allocation subfield corresponding to third 20 MHz and a bit corresponding to a resource unit allocation subfield corresponding to fourth 20 MHz in a 996-tone RU.

29. A communication apparatus, comprising a processor, a memory, and a transceiver, wherein
the transceiver is configured to receive an EHT PPDU frame;
the memory is configured to store program code; and
the processor is configured to invoke the program code in the memory to perform the method according to any one of claims 1 to 9.

30. A communication apparatus, comprising a processor, a memory, and a transceiver, wherein
the transceiver is configured to receive an EHT PPDU frame;
the memory is configured to store program code; and
the processor is configured to invoke the program code in the memory to perform the method according to any one of claims 10 to 14.

31. A computer-readable storage medium, wherein the computer-readable storage medium is configured to store instructions, and when the instructions are executed, the method according to any one of claims 1 to 9 is implemented.

32. A computer-readable storage medium, wherein the computer-readable storage medium is configured to store instructions, and when the instructions are executed, the method according to any one of claims 10 to 14 is implemented.

33. A chip system, comprising at least one processor and an interface, wherein
the interface is configured to receive an EHT PPDU frame sent by a second device, wherein the EHT PPDU frame comprises an EHT-SIG field, the EHT-SIG field comprises a common field and a user specific field, the common field comprises a resource unit RU allocation subfield, and the user specific field comprises a user field corresponding to the communication apparatus;
the processor is configured to determine, based on the RU allocation subfield and the user field, at least two RU s allocated to the communication apparatus, and the at least two RUs comprise a first RU and a second RU;
the processor is further configured to determine, based on the user field, that a first modulation and coding scheme MCS in a user field corresponding to the first RU is an MCS of an RU other than the second RU in the at least two RUs allocated to the communication apparatus; and
the processor is further configured to determine, based on the user field, that a second MCS in a user field corresponding to the second RU is an MCS of the second RU, and the first MCS is different from the second MCS.

34. A chip system, comprising at least one processor and an interface, wherein
the interface is configured to receive an EHT PPDU frame sent by a second device;
the EHT PPDU frame comprises an EHT-SIG field, the EHT-SIG field comprises a common field and a user specific field, the common field comprises an RU allocation subfield, and the user specific field comprises a user field corresponding to the communication apparatus;
the processor is configured to determine, based on the RU allocation subfield and the user field, at least two RU s allocated to the communication apparatus;
the RU allocation subfield comprises a preset bit; and
the processor is further configured to determine, based on the preset bit, an MCS corresponding to at least one RU of the communication apparatus.
